# EUROPÄISCHE PATENTANMELDUNG

(11) **EP 0 955 224 A2**
(43) Veröffentlichungstag der Anmeldung: **10.11.1999**
(21) Anmeldenummer: 99106301.7
(22) Anmeldetag: 26.03.1999
(51) Int. Cl.: B62B 3/02

(54) **Zusammenklappbarer, handgeführter Wagen**

(30) Priorität: 04.05.1998 DE 19819356
(71) Anmelder: Rautec Rauschenberger GmbH, 71679 Asperg (DE)
(72) Erfinder: Baumgärtel, Marion, 71732 Tamm (DE); Rauschenberger, Jörg, 71679 Asperg (DE); Hampe, Markus, 71638 Ludwigsburg (DE); Rauschenberger, Ute, 71679 Asperg (DE)
(74) Vertreter: Riedel, Peter, Dipl.-Ing.

(57) **Zusammenfassung**

Handgeführte Wagen (1) werden vielfältig eingesetzt. Sie dienen insbesondere zum Transport von Boxen und Kisten beim Einkaufen oder auch im häuslichen Bereich. Bei einem Wagen (1) mit zwei übereinander angeordneten Ablagen (2, 3) sind die Ablagen über Streben (8, 9) miteinander verbunden. Ein solcher Wagen (1) ist üblicherweise auf vier Rollen (4, 5) gelagert. Zur Führung des Wagens dient ein Griffbügel (12). Um den Wagen (1) auf einfache Weise an verschiedenen Einsatzorten verfügbar zu haben, sind die Ablagen (2, 3) als übereinander angeordnete Böden ausgebildet, wobei die Streben (8, 9) derart gelenkig an den Böden (2, 3) gelagert sind, daß ein Zusammenklappen in eine raumsparende Mitnahmestellung und ein Ausklappen in eine Gebrauchsstellung möglich ist.

## Beschreibung

Die Erfindung betrifft einen handgeführten Wagen, insbesondere zum Transport von Boxen und Kisten der im Oberbegriff des Anspruchs 1 angegebenen Gattung.

Handgeführte Wagen werden in einer großen Anzahl vornehmlich als Einkaufswagen zur Verfügung gestellt und benutzt. Diese Wagen sind auf Parkplätzen oder im Bereich des Eingangs von Supermärkten, Einkaufszentren oder dgl. an eigens dafür installierten Standorten abgestellt und können in der Regel durch Einstecken einer Pfandmünze entnommen werden.

Derartige Einkaufswagen haben je nach Art des Marktes bzw. dem Artikelsortiment unterschiedliche Gestalt, beispielsweise Lebensmittelmarkt, Getränkemarkt, Großverbrauchermarkt usw.. Ein erheblicher Nachteil der bekannten handgeführten Wagen besteht darin, daß diese nicht zum universellen Gebrauch geeignet sind und außerdem lediglich für Einkäufe in dem Laden bzw. Markt zur Verfügung stehen, der die Wagen bereitstellt. Es gibt jedoch häufig Bedarf, die erworbenen Waren nicht tragen zu müssen, sondern diese ebenfalls mit einem Wagen zu transportieren, beispielsweise auch im häuslichen Bereich, wo die erworbenen Waren vom Auto in die Wohnung geschafft werden müssen.

Es ist darüber hinaus in DE 295 15 154 U1 ein handgeführter Wagen beschrieben, der zwei übereinander angeordnete Ablagen zur Aufnahme von Boxen, Kisten und dergleichen umfaßt und bei dem die Ablagen über seitliche Scherengitter verbunden sind. Durch Umklappen eines als Deichsel gestalteten Handgriffs können die Ablagen und Scherengitter zusammengeklappt bzw. ausgeklappt werden. Dieser Wagen ist jedoch bezüglich seiner Beladungsmöglichkeiten unzweckmäßig und nimmt im zusammengeklappten Zustand noch ein erhebliches Bauvolumen ein, so daß die Mitnahme nur eingeschränkt möglich ist.

Aus DE 93 15 155 U1 ist ein handgeführter Wagen bekannt, der sich insbesondere zum Transport von Boxen und Kisten eignet. Dieser Wagen ist auf vier Rollen abgestützt und weist einen Griffbügel zum Führen auf. Der Wagen umfaßt zwei Böden, die über gelenkig an den Böden gelagerte Streben miteinander verbunden sind. Diese Streben bilden ein Scherengitter auf jeder Seite des Wagens, wobei die Streben nahe dem hinteren Ende des Wagens jeweils in einem ortsfesten Drehlager gehalten und die anderen Enden der Streben in Dreh- und Schubgelenken des oberen und unteren Bodens aufgenommen sind.

Die bekannten Anordnungen sind so gestaltet, daß durch die Art der Gelenke und Lager die beiden Böden stets in deckungsgleicher Lage übereinander befindlich sind und lediglich der Abstand zwischen der Gebrauchsstellung und der zusammengeklappten Position geändert wird. Dadurch wird sowohl die Handhabung bei der Verstellung als auch das Be- und Entladen des unteren Bodens erschwert.

Der vorliegenden Erfindung liegt die Aufgabe zugrunde, einen handgeführten Wagen der im Oberbegriff des Anspruchs 1 genannten Gattung zu schaffen, der einfacher zu be- und entladen ist und leichter zu handhaben ist.

Diese Aufgabe wird durch einen handgeführten Wagen mit den Merkmalen des Anspruchs 1 gelöst.

Als Vorteile des Erfindungsgegenstandes sind anzusehen, daß der Wagen mit Boxen und Kisten auch in der unteren Ebene einfach zu be- und entladen ist und daß zum Zwecke der Mitnahme, beispielsweise im Kofferraum eines PKW, lediglich ein geringer Platzbedarf erforderlich ist. Die Ablagen sind flächig ausgebildet, wobei sich die obere Ablage in Benutzerhöhe befindet, das heißt, ein Bücken zum Be- und Entladen des oberen Bodens ist nicht erforderlich. Auch der untere Boden ist leicht zugänglich, da sich die Streben im rückwärtigen Bereich der Seitenwände der Böden befinden. Der Wagen eignet sich insbesondere zum Transport handelsüblicher Boxen und Kisten und ist auf einfache Weise handhabbar. Erwähnenswert ist auch, daß bei dem Wagen eine größere Variabilität der Nutzungsmöglichkeit gegeben ist.

Damit die Böden mit den Streben auf einfache Weise zusammenklappbar bzw. ausklappbar sind, bilden die Streben Scherengitter mit einem drehgelenkartigen Kreuzungspunkt, die auf beiden Seiten des Wagens angeordnet sind. Um dem Wagen eine große Seitensteifigkeit zu verleihen, ist es vorteilhaft, einen Versteifungsbügel zwischen den Griffbügelstreben nahe der Drehgelenke anzuordnen. Der Versteifungsbügel bewirkt auch eine hohe Verdrehsteifigkeit sowie eine gleichmäßige Kraftverteilung auf beiden Seiten, was insbesondere beim Lenken von Vorteil ist.

Gemäß einer bevorzugten Ausgestaltung ist es vorteilhaft, daß der obere Boden um eine nahe des rückseitigen Randes verlaufende Schwenkachse hochklappbar ist. Auf diese Weise eignet sich der Wagen auch zum Transport hoher Gegenstände bzw. aufeinandergestapelter Normboxen allein auf dem unteren Boden. Ein besonders einfacher Schwenkmechanismus für den oberen Boden besteht darin, daß der Boden nahe dem rückseitigen Rand als Lager zur Aufnahme des Versteifungsbügels zwischen den Hauptstreben oder Griffbügelstreben ausgebildet ist. Auf diese Weise erfüllt der Versteifungsbügel sowohl die Funktion der großen Seitenstabilität als auch als Trag- und Schwenklager für den oberen Boden.

Zur Lagerung der Nebenstreben wird es als besonders vorteilhaft angesehen, daß diese an ihren unteren Enden über eine Querstrebe miteinander verbunden sind, die als Lagerachse der Nebenstreben am unteren Boden dient. Aus Gründen der Stabilität und der Montage ist es dabei zweckmäßig, die Nebenstreben und die Querstrebe einstückig auszuführen, wobei vorzugsweise ein Stahlrohr verwendet wird, dessen Querschnitt im Bereich der Querstrebe kreisförmig und im Bereich der Nebenstreben rechteckig ist. Um die Querstrebe entsprechend schwenkbar am unteren Boden aufzunehmen, ist am rückseitigen Ende des unteren Bodens und in den Eckknoten eine Ausnehmung vorgesehen, in der die Querstrebe gelagert und gesichert ist.

Die Dreh-Schubgelenke für die Hauptstreben umfassen jeweils einen Gleitstein, der in einer seitlichen Nut des unteren Bodens verschieblich gelagert ist. Dieser Gleitstein besitzt eine Bohrung, in die ein Zapfen am unteren Ende der Hauptstrebe eingreift, so daß die Hauptstrebe während der Gleitverschiebung des Dreh-Schubgelenks schwenkbar ist. Damit der Gleitstein sicher in der Nut gehalten wird, ist am Gleitstein ein Steg vorgesehen, der eine in Längsrichtung der Nut verlaufende Rippe hintergreift. Der Griffbügel ist mit seitlichen Griffbügelstreben ausgeführt, die über Drehgelenke an den oberen Enden der Hauptstreben schwenkbar gelagert sind. Diese Griffbügelstreben sind über Hilfsstreben gelenkig mit den Nebenstreben verbunden, so daß bei Verschwenken des Griffbügels um die Achse der Drehgelenke die beiden Scherengitter auseinander- oder zusammengefahren werden, je nachdem, in welcher Richtung die Verschwenkung erfolgt.

Die Nebenstreben sind ebenfalls mittels Drehgelenken mit den Hilfsstreben verbunden. Damit gleichzeitig mit der Bewegung der oberen Enden der Nebenstreben gegenüber dem unteren Boden auch der obere Boden angehoben bzw. abgesenkt wird, sind an den Drehgelenken der oberen Enden der Nebenstreben Stützteile vorgesehen, die den oberen Boden untergreifen. Damit der obere Boden gegen Seitenkräfte sicher auf den Stützteilen gelagert ist, wird es als zweckmäßig angesehen, daß der Boden an seinen Längsseiten eine Auflagekante aufweist und in den Stützteilen eine Führungsnut ausgebildet ist, in die diese Auflagekante greift. Zur Sicherung der Auflagekante gegen unbeabsichtigtes Ausheben aus der Führungsnut ist ein Rasthaken vorgesehen, der den oberen Rand der Auflagekante übergreift.

Die Hauptstreben und Griffbügelstreben bestehen vorzugsweise aus einem Rechteckrohr, wofür insbesondere Leichtmetallprofile in Betracht kommen. Die die Gelenke bildenden Endstücke bestehen vorzugsweise aus Kunststoff und sind mit den Rechteckrohren zweckmäßigerweise verquetscht oder verschraubt.

Der obere und der untere Boden weisen mindestens annähernd gleich große Flächen auf. Eine solche Ausgestaltung empfiehlt sich nicht zuletzt im Hinblick auf die Verwendung von handelsüblichen Klappboxen oder steifen Boxen, sondern auch hinsichtlich eines kompakten Aufeinanderliegens im zusammengeklappten Zustand. Der obere und der untere Boden sind entlang des gesamten Umfangs mit einem sich über die Bodenfläche erhebenden Rand versehen, wobei die Höhe des Randes bezogen auf die Bodenfläche vorzugsweise etwa 20 mm beträgt. Eine solche Randhöhe verhindert das Herabrutschen von auf der Bodenfläche abgestellten Gegenständen. Dabei wird es als besonders vorteilhaft angesehen, daß die Böden bezüglich ihrer Länge und Breite derart bemessen sind, daß handelsübliche Boxen rutschfest aufgenommen werden, und zwar durch formschlüssiges Ineinandergreifen. Dies wird bei 32 Liter-Boxen dadurch erreicht, daß diese innerhalb des Randes auf der Bodenfläche abgestellt werden, und 45 Liter-Boxen werden auf die gleiche Weise auf dem Rand abgestützt, wie dies beim Aufeinanderstapeln mehrerer Boxen durch den Stapelrand erfolgt.

Aus Gründen der Gewichtsersparnis sind der obere und/oder der untere Boden im Bereich der Bodenfläche mit einem Lochmuster versehen. Auf der Fläche können Noppen angeordnet werden, die nach oben gerichtet sind und durch formschlüssigen Eingriff in Ausnehmungen an der Unterseite von Boxen oder Kisten greifen. Solche Noppen können aber auch auf dem Rand oder auf der Oberseite von Knotenpunkten vorgesehen sein. Derartige Noppen sind insbesondere zur Sicherung von Getränkekisten gegen Verschiebung geeignet. Noppen an den Ecken des unteren Bodens zusammen mit seitlich am Rand angebrachten Laschen ermöglichen das Einfassen von Kisten mit Normabmessungen (300 x 400 mm oder 400 x 600 mm) über deren Stapelränder.

Damit die Böden, d.h. insbesondere die Bodenflächen eine große Biegesteifigkeit aufweisen, ist es zweckmäßig, daß die Böden an der Unterseite mit gitterartigen Versteifungsrippen versehen sind, wobei eine große Verwindungssteifigkeit durch diagonal zur Bodenflächenerstreckung angeordnete Versteifungsrippen gegeben ist.

Es ist ein Mechanismus vorgesehen, durch den das Scherengitter in mindestens zwei Grundstellungen fixierbar ist. Zweckmäßigerweise sind jedoch weitere Fixierstellungen vorgesehen, beispielsweise mit senkrecht nach oben stehenden Griffbügelstreben, wodurch der Wagen auch bei äußerst beengten Platzverhältnissen benutzbar ist. Um ein unbeabsichtigtes Zusammenklappen des Wagens zu vermeiden, ist zwischen den Grundstellungen mindestens eine Fangraststellung vorgesehen, in der der Mechanismus selbsttätig arretiert, sofern die zur Entriegelung dienende Drucktaste versehentlich ausgelöst wurde. Die Streben klappen somit nur um einen bestimmten Winkel zusammen, dann greifen die Arretiermittel ineinander und fangen die Schwenkbewegung auf. Dies verhindert ein ungewolltes vollständiges Zusammenklappen des Wagens und vermeidet Verletzungen. Der Mechanismus ist zweckmäßigerweise in das Drehgelenk zwischen Hauptstrebe und Griffbügelstrebe integriert. Dadurch können nicht nur zusätzliche Teile eingespart werden, da ohnehin notwendige Teile mit einer entsprechend vorgesehenen Gestaltung benutzt werden können, sondern der Mechanismus ist auch vor Beschädigung und Verschmutzung geschützt.

Eine zweckmäßige Ausgestaltung besteht darin, daß an dem der Hauptstrebe zugeordneten Teil des Drehgelenks radiale Ausnehmungen, beispielsweise Zahnlücken, vorgesehen sind, in die ein in dem der Griffbügelstrebe zugeordneten Teil des Drehgelenks längsverschieblicher Gelenkschieber eingreift. Damit der Gelenkschieber selbsttätig in eine Arretierposition gelangt, sobald eine der vorgesehenen Stellungen erreicht ist, wird eine Feder vorgesehen, die den Gelenkschieber in Arretierrichtung belastet. Die Entriegelung soll ausschließlich beabsichtigt erfolgen, und hierzu wird zweckmäßigerweise eine in dem Griffbügel gelagerte Drucktaste vorgesehen. Diese Drucktaste wirkt auf je einen mit den Gelenkschiebern jedes Gelenks gekoppelten Seilzug. Je nach Belastung des Wagens können enorme Haltekräfte auf die Arretiervorrichtung wirken. Um diese Kräfte zu verteilen, ist es zweckmäßig, in den Drehgelenken auf beiden Seiten des Wagens Arretiervorrichtungen vorzusehen, die identisch ausgestaltet und mittels der Drucktaste gleichzeitig betätigbar sind.

Das Fahrwerk ist unmittelbar an dem unteren Boden angebunden oder an Eckknoten des Bodens. Es umfaßt vier Rollen, wobei zweckmäßigerweise zwei Lenkrollen und zwei starr gelagerte Rollen vorgesehen sind, um trotz guter Lenkeigenschaften ein seitliches Wegdriften des Wagens zu vermeiden. Vorzugsweise sind die hinteren Rollen mit starren Achsen ausgeführt und die vorderen Rollen als Lenkrollen ausgebildet, deren vertikale Zapfen in Knotenpunkten, die am vorderen Rand des unteren Bodens angeformt sind, aufgenommen werden. Das Packmaß des zusammengeklappten Wagens kann durch Abnehmen der Rollen weiter reduziert werden. Aus diesem Grund ist es vorteilhaft, die Rollen mittels Schnellverschlüssen an dem unteren Boden zu befestigen. Diese Schnellverschlüsse sind vorzugsweise als Schieberiegel oder Riegelteile ausgebildet, die in Ringnuten der vertikalen Zapfen der Lenkrollen oder Lagerzapfen der starren Rollen greifen. Die Schieberiegel oder Riegelteile sind in Führungen am unteren Boden in zwei definierten Positionen einstellbar und unverlierbar gehalten. Somit verbleiben die Schieberiegel auch bei abgenommenen Rollen in ihren Führungen, so daß diese beim Anbauen der Rollen sofort wieder zur Verfügung stehen. Durch Federwirkung verriegeln die Riegel selbsttätig beim Anbau der Rollen.

Der untere Boden ist an der Unterseite vorzugsweise mit Aufnahmen für die demontierten Rollen versehen. Dabei ist es von Vorteil, zur Fixierung der Rollen Schnappverbindungen anzuordnen, die einstückig mit dem unteren Boden bzw. der Hinterradnabe ausgeführt sind. Dadurch werden separate Befestigungsteile vermieden. In der Verstauposition werden die Achsen der hinteren Rollen durch Löcher des Lochmusters im Boden gesteckt. Zur Erleichterung der Montage bzw. Demontage der hinteren Rollen sind in den Felgen dieser Rollen Fingerlöcher vorgesehen.

Eine weitere zweckmäßige Ausgestaltung des Wagens besteht darin, daß eine auf die hinteren Rollen wirkende Bremsvorrichtung vorgesehen ist. Dadurch kann der Wagen sicher abgestellt werden, ohne ein Davonrollen befürchten zu müssen, selbst wenn der Boden eine Neigung aufweist. Eine solche Bremsvorrichtung besteht beispielsweise aus einem Stab mit gekröpften Enden, die in Bremsriegel greifen, die ihrerseits in Ausnehmungen der Rollen einschwenkbar sind. Die Betätigung der Bremsvorrichtung erfolgt vorzugsweise mittels eines Fußpedals, die Rückstellung der Bremsriegel durch Anheben des Fußpedals.

Ein Ausführungsbeispiel der Erfindung ist nachstehend anhand der Zeichnung näher erläutert. In der Zeichnung zeigt:
- Fig. 1: eine perspektivische Ansicht des Wagens in ausgeklappter Gebrauchsstellung,
- Fig. 2: den Wagen gemäß Fig. 1 in Seitenansicht,
- Fig. 3: die Seitenansicht des Wagens in zusammengeklappter Stellung,
- Fig. 4: eine perspektivische Explosionsdarstellung der Bauteile gemäß Fig. 1,
- Fig. 5: eine Darstellung der Gesamtverstrebung auf einer Seite des Wagens im zusammengeklappten Zustand,
- Fig. 6: die Streben eines Scherengitters mit Lagerung am oberen und unteren Boden,
- Fig. 7: einen Ausschnitt der Lagerung der Nebenstrebe am Eckknoten,
- Fig. 8: einen Ausschnitt der Lagerung der Hauptstrebe am unteren Boden,
- Fig. 9: ein Lager im Kreuzungspunkt des Scherengitters in Explosionsdarstellung,
- Fig. 10: einen die Lagerung des oberen Bodens zeigenden Ausschnitt,
- Fig. 11: ein Drehgelenk mit Stützteil für den oberen Boden in Explosionsdarstellung,
- Fig. 12: einen Schnitt durch den hinteren Teil des oberen Bodens 2,
- Fig. 13: den Bereich des Drehgelenks zwischen Hauptstrebe und Griffbügelstrebe,
- Fig. 14: eine Explosionsdarstellung der Einzelteile der Anordnung gemäß Fig. 13,
- Fig. 15 und 16: eine Stütze in zwei verschiedenen Stellungen,
- Fig. 17: einen Schnitt durch eine Strebe mit darin befestigtem Gelenkstutzen,
- Fig. 18 und 19: den oberen Boden in perspektivischer Darstellung von oben und von unten,
- Fig. 20 und 21: den unteren Boden in perspektivischer Darstellung von oben und von unten,
- Fig. 22 bis 24: den oberen Boden mit Spanngurt sowie montierter Klappbox,
- Fig. 25: eine Explosionsdarstellung des Griffbügels mit einer Drucktaste,
- Fig. 26: eine Explosionsdarstellung einer Ausführungsform der ein Drehgelenk bildenden Teile,
- Fig. 27 bis 30: die Befestigung von Lenkrollen am unteren Boden,
- Fig. 31 bis 33: die Befestigung von starr gelagerten Rollen am unteren Boden,
- Fig. 34: eine perspektivische Einzeldarstellung eines Riegelteils für die starr gelagerten Rollen,
- Fig. 35 und 36: das Verstauen der Rollen an der Unterseite des unteren Bodens,
- Fig. 37 und 38: in Explosionsdarstellung eine Bremsanordnung für die hinteren Rollen in gelöster und arretierter Stellung,
- Fig. 39: die Seitenansicht des Wagens in einer weiteren Gebrauchsstellung,
- Fig. 40 und 41: perspektivische Darstellungen des Wagens mit hochgeklapptem oberen Boden.

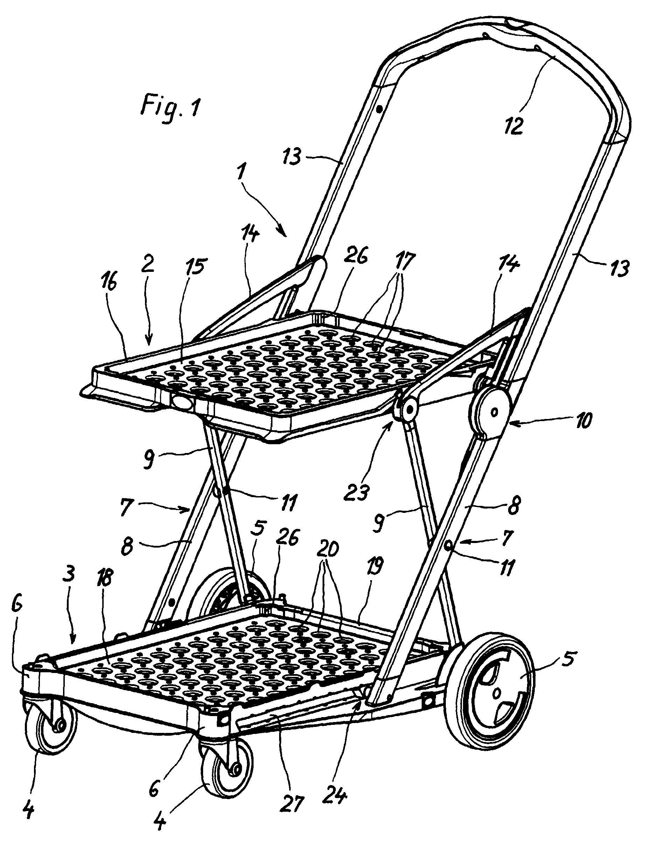

In Fig. 1 ist die perspektivische Ansicht eines Wagens 1 in einer ausgeklappten Gebrauchsstellung gezeigt. Dieser Wagen 1 umfaßt einen oberen Boden 2 und einen unteren Boden 3, die in der dargestellten Gebrauchsstellung im wesentlichen übereinander in einem entsprechenden Abstand angeordnet sind. Diese Böden 2 und 3 dienen zur Aufnahme von Boxen oder Kisten, insbesondere von handelsüblichen Klappboxen und Getränkekisten, so daß der Wagen 1 hauptsächlich zur Verwendung als Einkaufswagen geeignet ist. Am unteren Boden 3 sind vier Rollen angeordnet, wobei an dem vorderen Ende des Bodens 3 zwei Lenkrollen 4 und am hinteren Ende zwei an starren Achsen gelagerte Rollen 5 vorgesehen sind. Die Lenkrollen 4 sind in an der vorderen Begrenzung des unteren Bodens 3 angeformten Knotenpunkten 6 gehalten.

Der obere Boden 2 und der untere Boden 6 sind über an den Längsseiten des Wagens 1 befindliche Scherengitter 7 gelenkig miteinander verbunden. Jedes Scherengitter 7 umfaßt eine Hauptstrebe 8 sowie eine Nebenstrebe 9, die mittels eines Kreuzungspunktes 11 gelenkig miteinander befestigt und auf diese Weise gegeneinander verschwenkbar sind. Am oberen Ende der Hauptstrebe 8 befindet sich ein Drehgelenk 10, an dem eine Griffbügelstrebe 13 angeordnet ist. Die aus der Darstellung ersichtlichen seitlichen Griffbügelstreben 13 sind an ihren oberen Enden über den Griffbügel 12 verbunden. Das untere Ende der Hauptstreben 8 ist jeweils mit einem Dreh-Schubgelenk 24 versehen, das in einer an den Längsseiten des unteren Bodens 3 vorhandenen Führungsnut 27 längsverschieblich ist. Das obere Ende jeder der Nebenstreben 9 weist ein Drehgelenk 23 auf, von dem ausgehend sich eine Hilfsstrebe 14 zu der Griffbügelstrebe 13 erstreckt, an welcher sie gelenkig befestigt ist. An den Drehgelenken 23 sind später noch näher beschriebene Stützteile vorgesehen, die zur Auflagerung des oberen Bodens 2 dienen.

Der obere Boden 2 besteht im wesentlichen aus einer Bodenfläche 15 mit einem diese an ihrem gesamten Umfang umgebenden Rand 16, der über die Ebene der Bodenfläche 15 nach oben vorsteht. Die Höhe des Randes 16 bezogen auf die Bodenfläche 15 beträgt vorzugsweise etwa 20 mm. Die Bodenfläche 15 ist mit einem Lochmuster versehen, durch das eine Vielzahl von gleichmäßig angeordneten und gleich großen Löchern 17 gegeben ist. Durch dieses Lochmuster ergibt sich eine Materialersparnis sowie eine Gewichtsreduzierung. In ähnlicher Weise ist der untere Boden 3 ausgebildet, der ebenfalls eine Bodenfläche 18 mit entlang ihres gesamten Umfangs verlaufendem Rand 19 aufweist. Die Bodenfläche 18 ist mit dem gleichen Lochmuster versehen, so daß eine Vielzahl von Löchern 20 in der Bodenfläche 18 vorhanden ist. Die Höhe des Randes 19 ist gleich derjenigen des Randes 16 am oberen Boden 2.

Die Größe der Bodenflächen 15 und 18 sowie die Gestaltung der Ränder 16 und 19 berücksichtigt die Standardmaße von Boxen, insbesondere von Klappboxen mit 32 und 45 Liter Inhalt. Die 32-Liter-Boxen können auf der Bodenfläche 15 bzw. 18 des oberen Bodens 2 bzw. unteren Bodens 3 abgestellt werden und sind durch den Rand 16 bzw. 19 gehindert, von der Bodenfläche 15 bzw. 18 zu rutschen. Um diese 32-Liter-Boxen vollständig rutschfrei sowohl in Längs- als auch in Querrichtung zu halten, sind auf der Innenseite des Randes 16 bzw. 19 Zusatzecken 26 angeformt, die dem Außenmaß der Aufstandsfläche der Normboxen entsprechen. Die 45-Liter-Normboxen haben eine etwas größere Grundfläche, so daß diese Normboxen von den Rändern 16 bzw. 19 getragen werden. Dabei umgreift die Oberkante der Ränder 16 bzw. 19 entsprechende Stapelränder an der Unterseite der Normboxen, was dem Prinzip des lagesicheren Übereinanderstapelns von Normboxen mit Hilfe des Stapelrandes entspricht. Der untere Boden 3 ist auch zum Transport von Getränkekisten in besonderer Weise angepaßt. Bei Getränkekisten sind andere Abmessungen vorhanden als bei den genannten Boxen, wobei im vorliegenden Fall hauptsächlich den Kisten für Mineralwasserflaschen mit Grundflächenmaßen von 276 mm x 357 mm Rechnung getragen ist, aber auch die sogenannten Modulkisten mit Grundflächen von 300 mm x 400 mm bzw. 200 mm x 300 mm sowie Normbehälter mit Grundflächen von 400 mm x 600 mm berücksichtigt sind. Auf die Ausbildung des Bodens 3 im Hinblick auf die Aufnahme von Getränkekisten wird später zu Fig. 14 noch näher eingegangen.

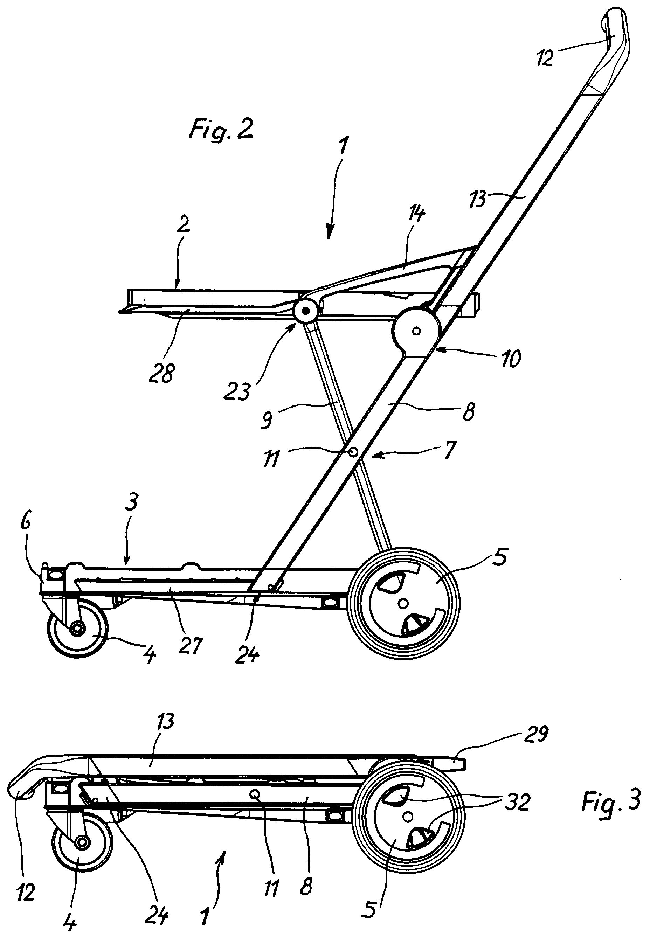

Die Fig. 2 zeigt den Wagen 1 in Seitenansicht in der Gebrauchsstellung gemäß Fig. 1. Daraus ist ersichtlich, daß in dieser Stellung das Scherengitter 7 vollständig hochgestellt ist, wobei sich das Dreh-Schubgelenk 24 der Hauptstrebe 8 in der hintersten Position in der seitlichen Führungsnut 27 am unteren Boden 3 befindet. Gleichzeitig befindet sich das Drehgelenk 23 des oberen Endes der Nebenstrebe 9 im Bereich einer hinteren Endposition einer Auflagekante 28 des oberen Bodens 2. Das Drehgelenk 10 ist in dieser Gebrauchsstellung in einer solchen Endlage, in der die Hauptstrebe 8 und die Griffbügelstrebe 13 fluchtend zueinander verlaufen. Die übrigen Bezugszeichen in Fig. 2 stimmen für gleiche Teile mit denjenigen der Fig. 1 überein.

Die Fig. 3 zeigt eine Seitenansicht des Wagens 1 in zusammengeklappter Stellung, in der die beiden Böden unmittelbar aufeinanderliegen. Die Hauptstrebe 8 und Griffbügelstrebe 13 verlaufen dabei parallel zueinander, und das Dreh-Schubgelenk 24 befindet sich in der vordersten Stellung der Führungsnut 27 am unteren Boden 3. Der Wagen 1 ist auch in dieser zusammengeklappten Stellung mittels des Griffbügels 12 handhabbar, da dieser als Tragegriff dient. Der Wagen 1 kann in der zusammengeklappten Stellung - wie in Fig. 3 gezeigt - auf den vier Rollen 4, 5 abgestellt sein, es ist jedoch ebenso möglich, diesen mit den am hinteren Ende des unteren Bodens montierten Rollen 5 und über das hintere Ende des oberen Bodens 2 hervorstehende Stützen 29 auf einer Aufstandsfläche abzusetzen. Wie aus Fig. 3 weiter deutlich wird, ist der Platzbedarf für den zusammengeklappten Wagen 1 sehr gering, so daß eine Mitnahme des Wagens 1 zu unterschiedlichen Einsatzorten problemlos möglich ist und beispielsweise auch im Kofferraum eines PKW platzsparend unterzubringen ist, ohne dessen Fassungsvermögen wesentlich zu beeinträchtigen. Aus Fig. 3 ist außerdem zu ersehen, daß die hinteren Rollen 5 Felgen 30 mit zwei darin angeordneten Fingerlöchern 32 aufweisen. Diese Fingerlöcher 32 dienen der Handhabung der Rollen 5 bei der Montage bzw. Demontage, so daß ein Berühren des äußeren Randes bzw. Reifens der Rollen 5 nicht notwendig ist.

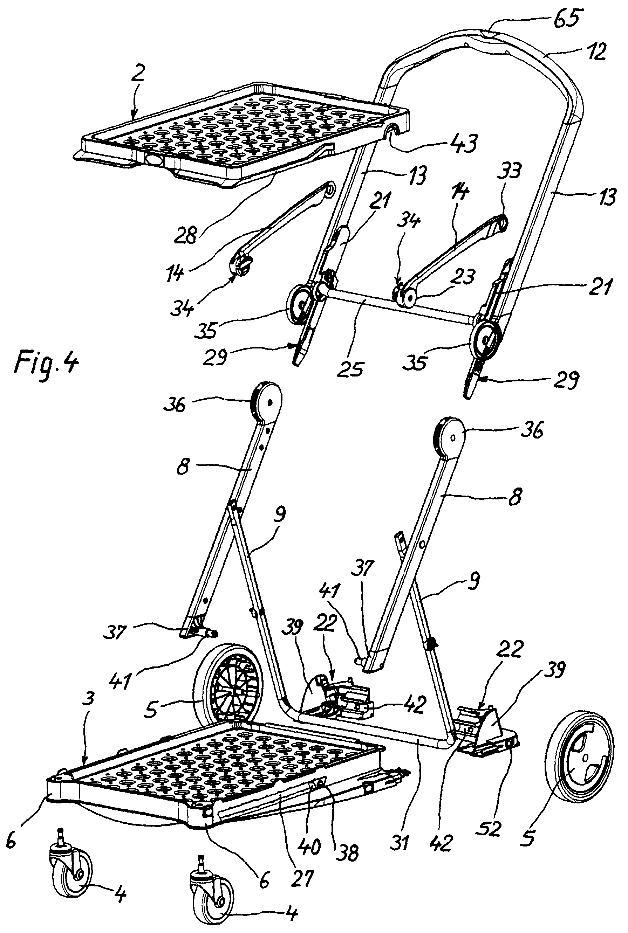

Die Fig. 4 zeigt eine perspektivische Explosionsdarstellung der Bauteile gemäß Fig. 1. Daraus ergibt sich, daß der Griffbügel 12 mit den Griffbügelstreben 13 und einem an diesem befestigten Versteifungsbügel 25 eine seitenstabile Verstrebung bildet. Der Versteifungsbügel 25 ist mit abgewinkelten Enden versehen, die in zweischalig gestalteten Bügelabdeckungen 21 aufgenommen sind, die in Verlängerung nach unten die Stützen 29 umfassen, die im zusammengeklappten Zustand nach hinten hervorstehen, wie dies in Fig. 3 gezeigt ist. An den unteren Enden der Griffbügelstreben 13 sind Gelenkteile 35 befestigt, die gemeinsam mit an den Hauptstreben 8 befestigten Gelenkteilen 36 die in den zuvor beschriebenen Figuren gezeigten Drehgelenke 10 bilden. Der Versteifungsbügel 15 ist vorzugsweise über je zwei Schrauben mit der Bügelabdeckung 21, der Griffbügelstrebe 13 und den in letztere eingesteckten Stutzen des Gelenkteils 35 verschraubt. An der Unterseite des oberen Bodens 2 ist nahe der hinteren Kante eine Aussparung 43 vorgesehen, in der der Versteifungsbügel 25 aufgenommen wird und somit als Lager für den oberen Boden 2 dient. An den Hilfsstreben 13 ist auf der Innenseite der Drehgelenke 23 jeweils ein Stützteil 34 angeordnet, das die Auflagekante 28 am Seitenrand des oberen Bodens 2 untergreift, so daß der Boden 2 auf den Stützteilen 34 und dem Versteifungsbügel 25 aufliegt.

Aus Fig. 4 ist ferner ersichtlich, daß an dem anderen Ende der Nebenstrebe 9 eine Querstrebe 31 vorgesehen ist, die sich orthogonal zur Längsachse der Nebenstrebe 9 erstreckt und gleichzeitig - wie dies später noch näher erläutert wird - als Drehlager für die Nebenstrebe 9 am unteren Boden 3 dient. Die Hilfsstrebe 14 weist an dem dem Drehgelenk 23 entlegenen Ende ein Drehlager 33 auf, das zur Anlenkung an der Griffbügelstrebe 13 dient. Ferner ist aus Fig. 4 ersichtlich, daß im Griffbügel 12 eine Drucktaste 65 vorgesehen ist, mit der ein Arretierungsmechanismus entriegelt werden kann, um den Wagen 1 in eine der anderen Stellungen zu klappen.

An der Hinterkante des unteren Bodens 3 sind anbaubare Eckknoten 22 mit Ausnehmungen 42 vorgesehen, in die die Querstrebe 31 eingesetzt wird, so daß die Ausnehmungen 42 bzw. die Eckknoten 22 als Lagerelemente für die Querstrebe 31 und somit als Schwenklager für die Nebenstreben 9 dienen. Auf diese Weise erfüllt die Querstrebe 31 nicht nur den Zweck, den zu beiden Seiten des Wagens befindlichen Streben 8, 9 des Scherengitters 7 eine zusätzliche Stabilität zu verleihen, sondern dient gleichzeitig als Lagerachse für die Nebenstreben 9. Im vollständig aufgeklappten Zustand umgreifen die Eckknoten 22, die vorzugsweise aus Kunststoff bestehen, die unteren Enden der Nebenstreben 9 mittels Wandteilen 39, wodurch die Seitensteifigkeit des aus den Nebenstreben 9 und der Querstrebe 31 gebildeten Bügels erhöht wird. In den Eckknoten 22 ist je eine orthogonal zur Längsrichtung des Wagens verlaufende Bohrung 52 vorgesehen, in der eine Achse der hinteren Rollen 5 aufgenommen wird. Am unteren Ende der Hauptstreben 8 sind Knotenstücke 37 angeordnet, die mit Lagerzapfen 41 versehen sind. Diese Lagerzapfen 41 werden in Lagerhülsen an Gleitsteinen 40 aufgenommen. Die Gleitsteine 40 sind Bestandteil des in der Nut 27 beweglichen Dreh-Schubgelenkes 24 der zuvor beschriebenen Figuren.

Die Streben 8 und 13 sind vorzugsweise als Rechteckprofile ausgeführt und können aus Leichtmetall bestehen. Dabei ist es vorteilhaft, die Hauptstreben 8 und Griffbügelstreben 13 aus dem gleichen Rechteckprofil zu gestalten, Die Nebenstreben 9 und die Querstrebe 31 bestehen vorzugsweise aus Stahl und sind einstückig ausgeführt, wobei die Nebenstreben 9 einen rechteckigen Querschnitt und die Querstrebe 31 einen kreisförmigen Querschnitt aufweisen. Die Hilfsstreben 14 sind zweckmäßigerweise aus Kunststoff gefertigt, insbesondere wegen der notwendigen Formgebung im Bereich des Drehgelenkes 23 und des Stützteils 34.

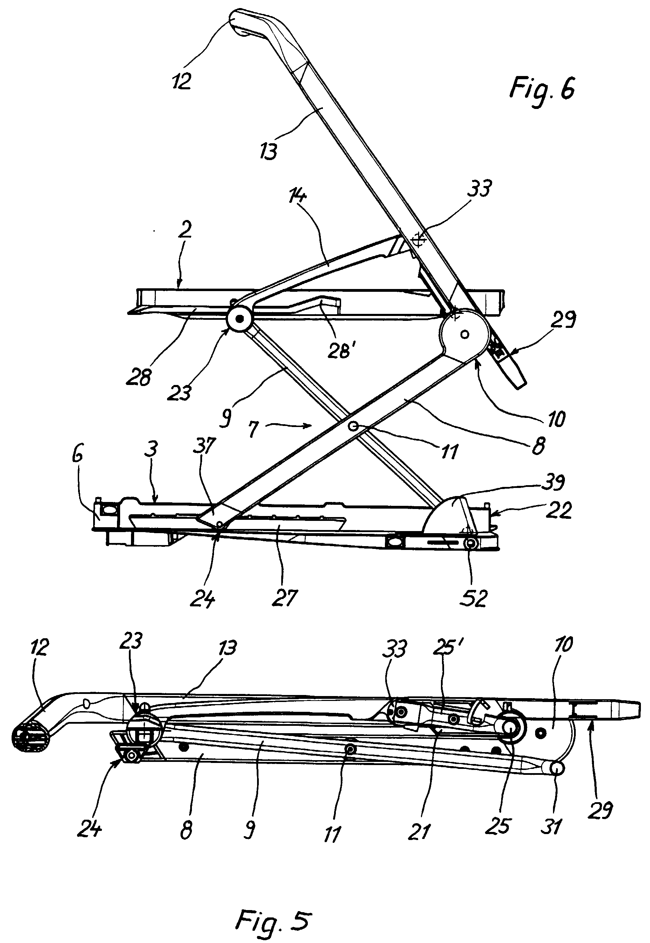

Die Darstellung in Fig. 5 zeigt die auf einer Seite des Wagens befindliche Gesamtverstrebung in zusammengeklapptem Zustand. Die Hauptstrebe 8 und die Nebenstrebe 9 sind so weit wie möglich um die Drehachse des Kreuzungspunktes 11 gegeneinander verschwenkt, so daß deren Längsachsen lediglich einen geringen Winkel zueinander einschließen. Wie Fig. 4 deutlich macht, ist die Nebenstrebe 9 an dem zum Griffbügel 12 benachbarten Ende etwas kürzer als die Hauptstrebe 8, d.h. das Drehlager 23 liegt dem Kreuzungspunkt 11 etwas näher als das Dreh-Schubgelenk 24. Dadurch wird bewirkt, daß der obere Boden sich beim Aufklappen nicht nur senkrecht nach oben, sondern gleichzeitig etwas nach hinten bewegt, wie dies aus der Darstellung in Fig. 2 deutlich wird. Dies bringt zusätzlichen Freiraum beim Beladen des unteren Bodens. In Verlängerung der Griffbügelstrebe 13 erstreckt sich die Stütze 29 über das Gelenk 10 hinaus. Die Stütze 29 besteht aus Kunststoff und ist einstückig mit einer Schale der Bügelabdeckung 21 ausgeführt. Der Versteifungsbügel 25 ist mit seinem abgewinkeltem Ende 25' an der Griffbügelstrebe 13 befestigt.

In Fig. 6 ist die seitliche Verstrebung mit den Böden 2 und 3 in einer Stellung während des Zusammen- bzw. Auseinanderklappens gezeigt. Das Scherengitter 7 befindet sich dabei in einer Zwischenstellung, so daß auch das Dreh-Schubgelenk 24 in der seitlichen Nut 27 am Boden 3 bzw. das Drehlager 23, das mit entsprechenden Mitteln die Auflagekante 28 am oberen Boden 2 untergreift, eine Position zwischen der vorderen und hinteren Endlage einnehmen. Die am unteren Ende der Nebenstrebe 9 angeordnete Querstrebe 31 ist zwischen dem hinteren Ende des unteren Bodens 3 und dem Eckknoten 22 gelagert, wobei die Querstrebe 31 als Lagerachse dient. Durch weiteres Verschwenken des Griffbügels 12 im Uhrzeigersinn um das Drehgelenk 10 wird die am Drehlager 33 mit der Griffbügelstrebe 13 verbundene Hilfsstrebe 14 mitgezogen, so daß das Drehgelenk 23 sich in Richtung auf das hintere Ende des oberen Bodens 2 bewegt. Dabei gleitet das Drehgelenk 23 entlang der Auflagekante 28, die an ihrem etwa in der Mitte der Längserstreckung des oberen Bodens 2 befindlichen Ende einen abgekröpften Bereich 28' aufweist. Durch dieses abgekröpfte Ende steht der obere Boden, insbesondere in der in Fig. 2 gezeigten Gebrauchsstellung, mindestens annähernd parallel zum unteren Boden 3.

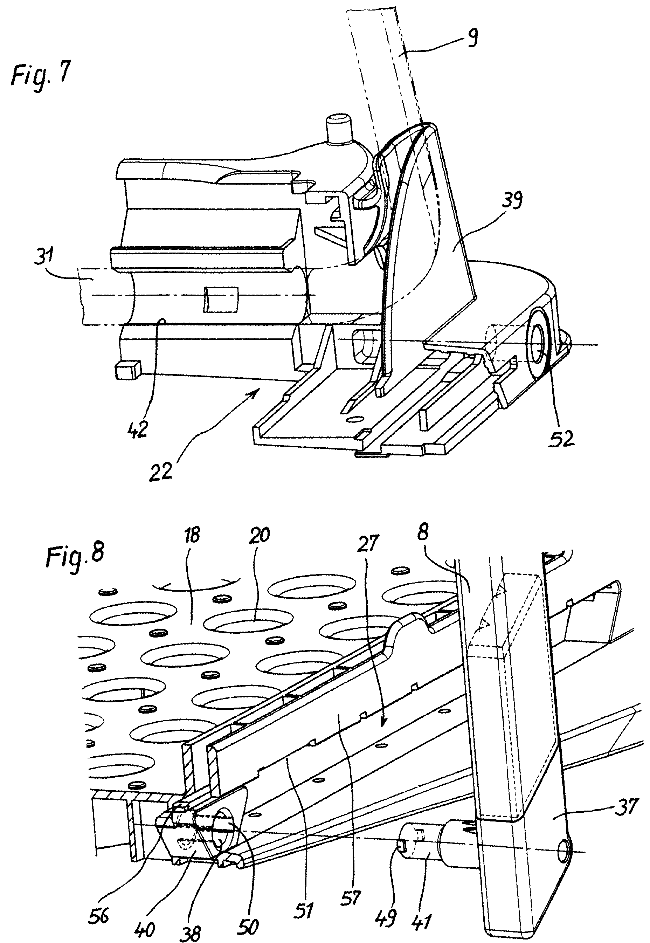

Die Fig. 7 zeigt einen Eckknoten 22 zur Lagerung der Nebenstreben 9 und deren einstückig mit diesen ausgeführter Querstrebe 31. Die unteren Enden der vorzugsweise einen rechteckigen Querschnitt aufweisenden Nebenstreben 9 befinden sich in von Wandteilen 39 gebildeten Aufnahmen, die die Nebenstreben 9 umgreifen. Die zur Seite gerichtete Bohrung 52 im Eckknoten 22 dient zur Aufnahme der in Fig. 4 gezeigten hinteren Rollen 5, wobei diese mit durch Lagerzapfen gebildete Achsstummel versehen sind, die in die Bohrungen 52 eingesteckt werden. Auf diese Weise wird die Last der Nebenstrebe 9 bzw. der Querstrebe 31 über den formstabilen Eckknoten 22 direkt auf die Radachse übertragen. Der Eckknoten 22 ist mit dem unteren Boden 3 durch Schnappverbindungen verzahnt und zusätzlich von unten durch eine Schraube gesichert. Die Ausnehmung 42 dient zur Aufnahme der Querstrebe 31.

In Fig. 8 ist ein Ausschnitt der Lagerung der Hauptstrebe 8 am unteren Boden 3 gezeigt. Die Hauptstrebe 8 ist an ihrem unteren Ende mit dem Knotenstück 37 versehen, das auf seiner dem Gleitstein 40 zugewandten Seite den Lagerzapfen 41 aufweist. Der in der Führungsnut 27 am Boden 3 verschieblich gelagerte Gleitstein 40 weist eine als Lagerhülse 38 dienende Bohrung auf, in welcher der Lagerzapfen 41 aufgenommen wird. Die axiale Sicherung zwischen Knotenstück 37 und Gleitstein 40 erfolgt über zwei Vorsprünge 49 am Lagerzapfen 41 des Knotenstückes 37, die den Gleitstein 40 hintergreifen. Durch zwei durchlaufende Nuten 50 am Gleitstein 40 läßt sich das Knotenstück 37 axial fügen, aber nur in einem Winkel, der sich nach Montage des Wagens nicht mehr einstellt, so daß eine dauerhafte Axialsicherung besteht. Zur Axialsicherung zwischen Gleitstein 40 und unterem Boden 3 weist der Gleitstein einen Steg 56 auf, der eine längs verlaufende Rippe 57 am Boden 3 hintergreift. An einer Aussparung 51, die der Gleitstein 40 während des Klappens passiert, springt diese Rippe 57 etwas zurück und ist nach außen angeschrägt, so daß der Gleitstein 40 hier leicht unter Ausnutzung der Materialelastizität eingedrückt werden kann.

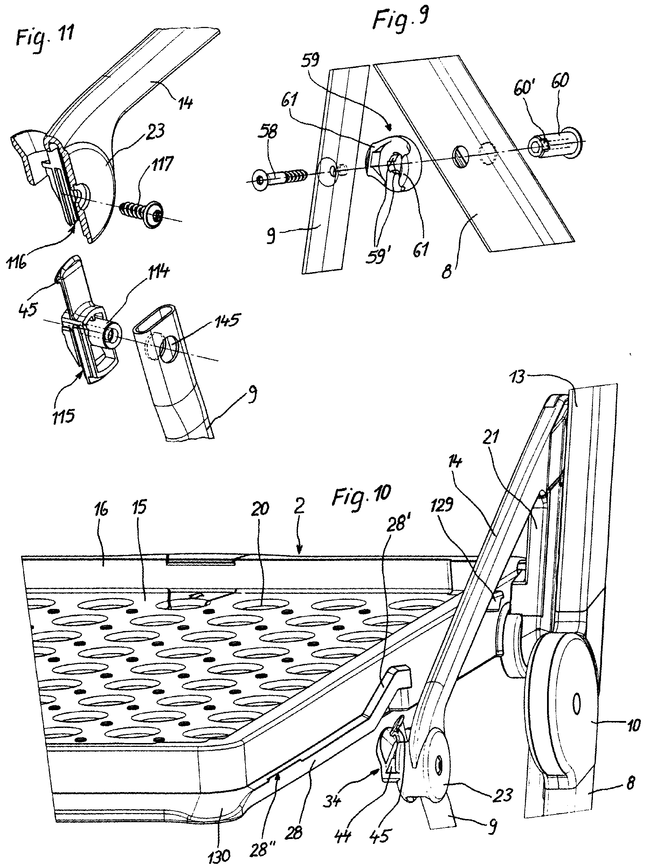

Die Fig. 9 zeigt eine Explosionsdarstellung der Einzelteile des Kreuzungspunktes 11, wobei dieser zwischen Hauptstrebe 8 und Nebenstrebe 9 außer durch eine Schraube 58 durch ein Distanzstück 59 und einen Lagerzapfen 60 gebildet wird. Dadurch, daß das Distanzstück 59 mit Anformungen 61 die Nebenstrebe 9 umgreift und das Distanzstück über eine Verzahnung 59' mit einer entsprechenden Verzahnung 60' am Lagerzapfen 60 drehsicher verbunden ist, kann die Schraube 58 in den Lagerzapfen geschraubt werden, ohne daß dieser gegen Verdrehen festgehalten werden muß. Zudem kann sich die Schraube 58 beim häufigen Auf- und Zuklappen nicht losdrehen, da der Lagerzapfen 60 an die Drehbewegungen der Nebenstrebe 9 gekoppelt ist.

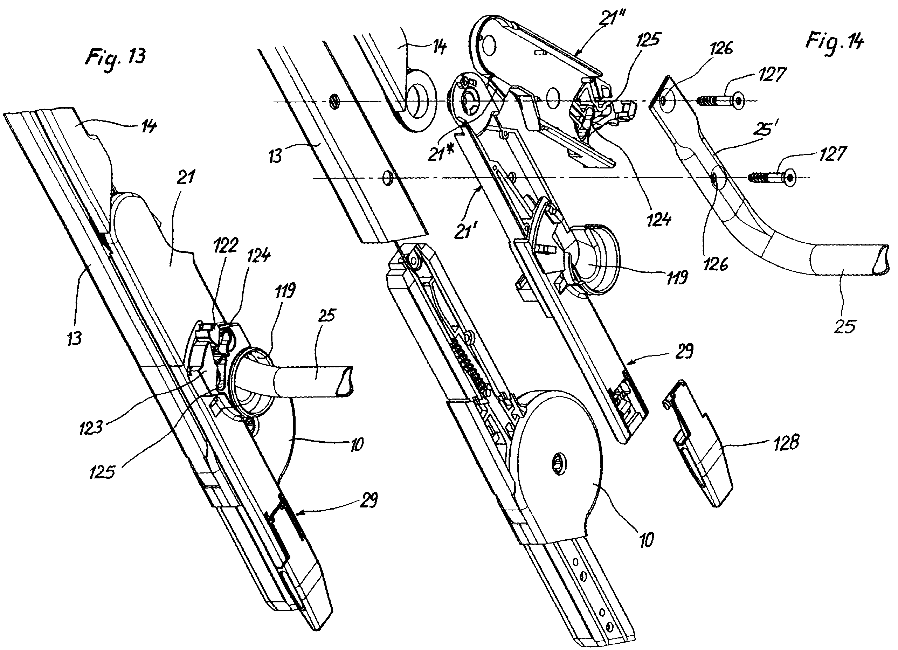

Die Fig. 10 zeigt einen Ausschnitt zur Erläuterung der Lagerung des oberen Bodens 2. Der Versteifungsbügel liegt dabei in der Aussparung an der Unterseite des oberen Bodens 2, und zur weiteren Abstützung ist an der Innenseite des Drehgelenkes 23 das Stützteil 34 vorgesehen. Dieses weist eine Nut 44 auf, in die die Auflagekante 28 eingreift und in dieser gleitverschieblich geführt wird. Damit der Boden 2 um die Längsachse des Versteifungsbügels 25 verschwenkbar und somit in eine hochgeklappte Stellung bringbar ist, ist das Stützteil 34 derart gestaltet, daß die Auflagekante 28 aus der Nut 44 und somit vom Stützteil 34 entfernbar ist. Um jedoch ein unbeabsichtigtes Entfernen der Auflagekante 28 aus dem Stützteil 34 zu vermeiden, ist ein Rasthaken 45 vorgesehen, der die Oberseite der Auflagekante 28 übergreift und somit die Führungskante 28 in der Nut 44 hält. Die Längsverschieblichkeit der Auflagekante 28 innerhalb des Stützteiles 34 wird durch den Rasthaken 45 nicht beeinträchtigt. Im vorderen Bereich 28'' ist die Auflagekante 28 nach innen abfallend angeschrägt. An den Ecken des vorderen Randes 16 sind Laschen 130 angeformt, die in der hochgeklappten Stellung des oberen Bodens 2 für eine Abstützung an dem Griffbügel 12 sorgen. An der Seitenfläche des Randes 16 befindet sich nahe der Bügelabdeckung 21 eine Rastkante 129, die mit später noch näher beschriebenen Rastnasen an der Bügelabdeckung 21 zusammenwirkt, um den oberen Boden 2 in der jeweiligen hochgeklappten Stellung zu sichern.

Die Fig. 11 zeigt in Explosionsdarstellung das obere Ende der Nebenstrebe 9 mit dem Drehgelenk 23 und daran angeformtem Stützteil 34. Ein Lagerzapfen 114 wird an einem Zwischenstück 115 ausgebildet, das in eine Aufnahmeöffnung 116 am Drehgelenk 23 einsetzbar ist. Das Zwischenstuck 115 wird bei der Montage zunächst mit seinem Lagerzapfen 114 in eine Bohrung des Nebenstrebenbügeis gesteckt und dann von unten in das Drehlager 23 der Hilfsstrebe 14 eingeführt und schließlich mit einer Schraube 117 gesichert. Wenn der obere Boden 2 auf dem Stützteil 34 aufliegt, umgreift der angeformte Haken 45 die Auflagekante 28 von oben, was den Boden 2 in der heruntergeklappten Position fixiert.

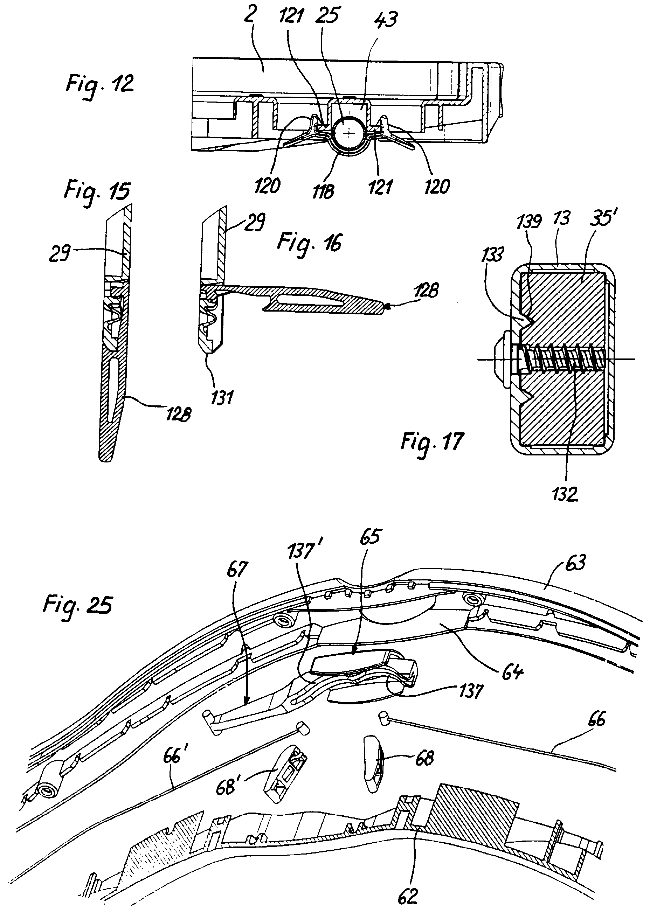

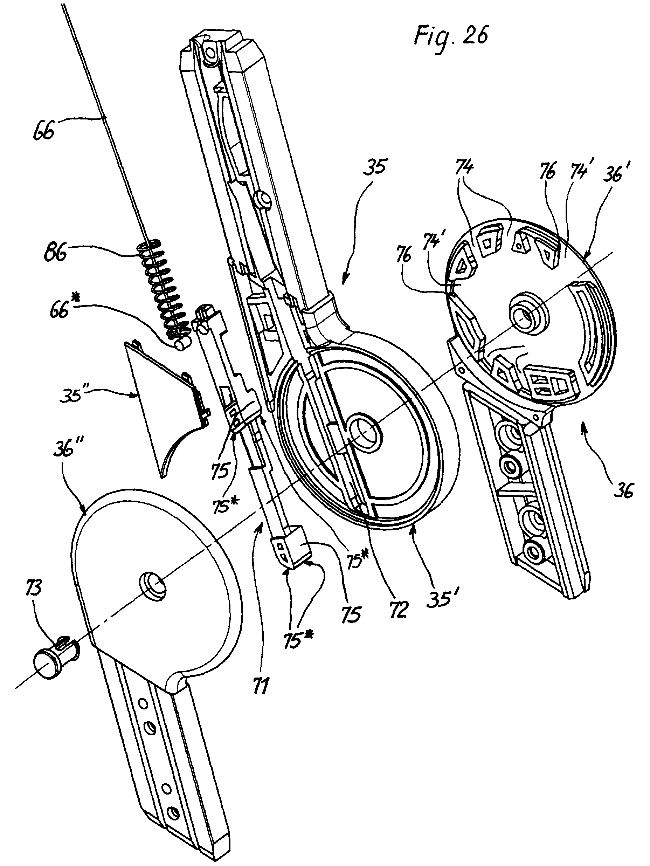

Die Fig. 12 zeigt einen Schnitt durch den hinteren Bereich des oberen Bodens 2. In der Aussparung 43 befindet sich der Versteifungsbügel 25, der mittels Kunststoff-Schnappschellen 118 befestigt ist. Die Schnappschellen sind an den Seiten als Klammern 120 ausgebildet, die hinter seitliche Rippen 121 neben der Aussparung 43 greifen.

In Fig. 13 ist der Bereich des Drehgelenks 10 zwischen Hauptstrebe 8 und Griffbügelstrebe 13 gezeigt mit dem an der Griffbügelstrebe 13 befestigten Versteifungsbügel 25. An der Griffbügelstrebe 13 ist außerdem die Bügelabdeckung 21 befestigt, die nahe der Drehachse für den oberen Boden, d.h. am Rande einer Öffnung 119 zum Durchtritt des Versteifungsbügels 25 zwei Rastnasen 122 und 123 aufweist. Diese Rastnasen 122, 123 sind über Federelemente 124, 125 abgestützt. An dem sich entlang der Hauptstrebe 8 erstreckenden Ende ist die Bügelabdeckung 21 als Stütze 29 ausgeführt, auf deren Funktion später noch näher eingegangen wird.

Aus der Explosionsdarstellung in Fig. 14 ist ersichtlich, daß die Bügelabdeckung 21 aus zwei Schalen 21' und 21'' besteht, die über ein Filmscharnier 21* verbunden sind. Das Ende 25' des Versteifungsbügels 25 ist zu einem flachen Querschnitt verformt und weist zwei Bohrungen 126 zur Aufnahme von Befestigungsschrauben 127 auf. An der als Stütze 29 ausgebildeten Verlängerung der Bügelabdeckung ist ein schwenkbar gelagertes Aufstellteil 128 befestigt. Dabei ist die Anordnung so getroffen, daß das Aufstellteil 128 zwei definierte Lagen einnehmen kann, wie dies in Fig. 15 und 16 dargestellt ist.

Die beiden Rastnasen 122, 123 an der Bügelabdeckung 21 greifen beim Hochklappen des oberen Bodens 2 hinter die am Boden angeformte Rastkante 129. Dabei ermöglicht die erste Rastnase 123, den Boden bei vollständig aufgeklapptem Wagen senkrecht zu stellen, dies empfiehlt sich z.B., wenn eine Box am Boden fixiert ist, da der Wagen bei vollständig hochgeklapptem Boden leicht nach hinten kippen kann. Die zweite Rastnase 122 hält den Boden in vollständig hochgeklappter Position. Wird der obere Boden heruntergeklappt oder wird der Wagen mit hochgeklapptem oberen Boden 2 zusammengeklappt, biegt die Auflagekante 28 über eine äußere Schräge den Rasthaken 45 zur Seite und legt sich wieder in die Nut 44 des Stützteils 34, wobei der Rasthaken zurückfedert. Für den Fall, daß der Wagen mit hochgeklapptem oberen Boden 2 zusammengeklappt wird, trifft die Auflagekante 28 gegen Ende des Klappvorgangs im vorderen Bereich 28'' auf den Rasthaken 45. In diesem Bereich 28'' ist die Auflagekante nach innen abfallend angeschrägt, so daß nach dem Zurückfedern des Rasthakens 45 nach dem Widerhakenprinzip eine unlösbare formschlüssige Verbindung entsteht. Damit löst sich beim erneuten Aufklappen des Wagens die Rastverbindung an der Rastnase 123, die andernfalls den oberen Boden 2 mit der Schwenkbewegung des Griffbügels 12 mitnehmen würde, die Raststelle 122 wird durchlaufen, und der obere Boden erreicht wieder die heruntergeklappte Stellung.

Die Montage des oberen Bodens 2 am Versteifungsbügel 25 erfolgt werkzeuglos über zwei der beschriebenen Kunststoff-Schnappschellen 118, die den Versteifungsbügel 25 von unten umgreifen und an den horizontalen Rippen 121 eingehängt sind. Die Verbindung stabilisiert sich unter Belastung selbst; wirkt z.B. durch eine weit vorne auf den Boden aufgebrachte Last eine Kraft, die den Boden 2 und den Versteifungsbügel 25 auseinander zieht, so wird die Krümmung der Schnappschellen 118 verstärkt und damit die Haltekraft der Klammern 120.

Wie bereits vorstehend beschrieben, werden der als gebogenes und am Ende flachgedrücktes Stahlrohr ausgebildete Versteifungsbügel 25 und die links- und rechtsseitige Bügelabdeckung 21 gemeinsam mit dem griffbügelseitigen Teil des vormontierten Gelenkes 10 an der Griffbügelstrebe 13 über selbstschneidende Kunststoffschrauben 127 verschraubt. Die Hilfsstrebe 14 wird zuvor mit ihrem hinteren Lagerauge über einen an der Bügelabdeckung angeformten Zapfen geschoben und ist nach der Montage zwischen Bügelabdeckung und Griffbügelstrebe eingeschlossen und somit axial gesichert.

Nach Montage der Schrauben 127 wird die an der unteren Schale 21' angeformte obere Schale 21'' über das Filmscharnier 21* geschlossen, wobei sie über Zapfen und Schnappverbindungen mit dem übrigen Bauteil verbunden wird. Nach dem Zusammenklappen greifen in die Rastnasen eingearbeitete Nuten in zugehörige Stege, wodurch eine Längsführung der Rastnasen auf dem feststehenden Teil der Bügelabdeckung entsteht. Diese Längsführungen sind gegenüber der Achse des Versteifungsbügels 25 und damit gegenüber der Schwenkachse des oberen Bodens radial angeordnet. Beim Einrasten der Rastkante 129 des oberen Bodens 2 in die Rastnasen 122, 123 können sich diese nun in radialer Richtung zurückbewegen, wobei die Federelemente 124, 125 als Druckfedern der Bewegung entgegenwirken und so das anschließende Einrasten bewirken. Aufgrund schräg ausgebildeter Flanken an den Rastnasen sind die Rastverbindungen stets durch Kraftwirkung wieder lösbar.

Das nach unten verlängerte Ende der Bügelabdeckung 21 ist als Stütze 29 ausgebildet, dessen Kante 131 zur Abstützung bei zusammengeklapptem Wagen mit demontierten Rädern dient, wobei Anformungen an den Hinterkanten der Eckknoten 22 die gegenüberliegenden Aufstellpunkte bilden, so daß der Wagen auf vier Punkten ruht. Um diese Aufstellfunktion auch gewährleisten zu können, wenn die Räder montiert sind, bedarf es einer Verlängerung der Stützen 29, da nun die Hinterräder 5 und nicht mehr die Eckknoten 22 die hinterste Stelle am unteren Boden 3 bilden. Zur Verlängerung dient das Aufstellteil 128 am Ende der Bügelabdeckung 21, das mit zwei Zapfen in zwei Langlöcher an der Bügelabdeckung eingehängt ist. Eine ins Ende der Bügelabdeckung 21 integrierte Feder stabilisiert die Aufstellstütze in aus- und eingeschwenkter Position, in ausgeschwenkter Position verzahnt sie schräge Flächen von Stütze 29 und Aufstellteil 128 gegeneinander, so daß dieses sich nur mit größerer seitlich wirkender Kraft wieder aus dieser Stellung lösen kann. Durch Gewichtsbelastung beim Abstellen des Wagens stabilisiert sich diese Verzahnung noch zusätzlich. In eingeschwenkter Position wird eine Fläche des Abstellteils von der Feder gegen eine vertikale Fläche an der Stütze 29 gedrückt, was die 90°-Stellung des Aufstellteils 128 gegenüber der Stütze stabilisiert.

Die Hauptstrebe 8 und Griffbügelstrebe 13 bestehen vorzugsweise aus rechteckigen Aluminiumprofilen, wie dies in Fig. 17 dargestellt ist. Die Verbindungen zwischen den Aluminiumprofilen und den einmündenden Kunststoffteilen, beispielsweise der Gelenkstutzen 35' oder Knotenstücke, erfolgt über selbstschneidende Kunststoffschrauben 132. Eine Paarung zwischen v-förmigen Nuten an den Einsteckteilen der Kunststoffteile und entsprechenden Stegen am Profil eliminiert beim Anziehen der Schraube über die Keilwirkung das fertigungstechnisch bedingte Spiel zwischen den Bauteilen, bewirkt zudem eine effektive Momentenabstützung und erhöht durch die Keilwirkung den Reibschluß und damit die Belastbarkeit der Verbindung in Profilrichtung.

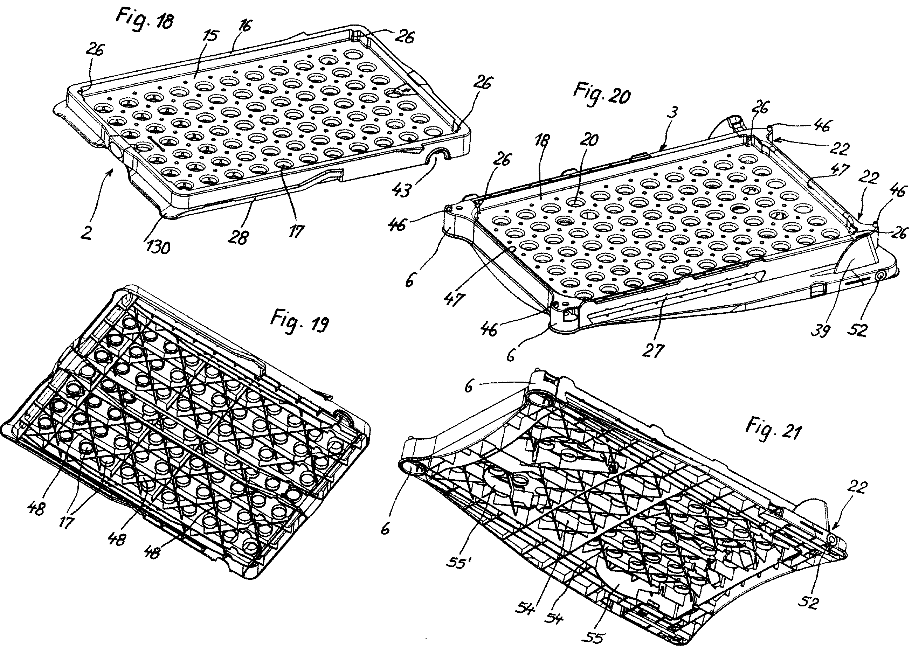

In Fig. 18 ist der obere Boden 2 in perspektivischer Ansicht von oben gezeigt. Aus dieser Darstellung ist zu entnehmen, daß an allen vier Ecken innerhalb des Randes 16 Zusatzecken 26 ausgebildet sind. Die Aussparung 43 ist zum Zweck der Montage des Versteifungsbügels vorgesehen. Im übrigen stimmen die Bezugszeichen mit denjenigen der zuvor beschriebenen Figuren überein, so daß zur Vermeidung von Wiederholungen auf die dortige Beschreibung verwiesen wird.

Die Fig. 19 zeigt in perspektivischer Darstellung eine Ansicht gegen die Unterseite des oberen Bodens 2, aus der ersichtlich ist, daß zur Erhöhung der Steifigkeit der Bodenfläche 15 an der Unterseite kreuzweise angeordnete Rippen 48 vorgesehen sind, wobei sich diese Rippen 48 zwischen den Löchern 17 des Lochmusters erstrecken.

In Fig. 20 ist eine perspektivische Ansicht des unteren Bodens 3 mit montierten Eckknoten 22 auf dessen Oberseite gezeigt, der in dieser Form als einstückiges Spritzgußteil herstellbar ist. Der untere Boden 3 weist an den vier Ecken seines die Bodenfläche 18 umgebenden Randes 19 ebenfalls Zusatzecken 26 auf, die dem Maß der 32-Liter-Boxen entsprechen. Auf der Oberseite der Knotenpunkte 6 und den Eckknoten 22 sind Noppen 46 vorgesehen. Am unteren Boden 3 ist durch vordere und hintere Ausschnitte 47 die paßgenaue Fixierung von zwei 12 x 0,7 Liter GDB-Normgetränkekästen über deren Stapelränder möglich. Die Noppen 46 sowie seitliche Laschen 133 ermöglichen das Einfassen von bis zu zwei Modulkästen über deren Stapelränder.

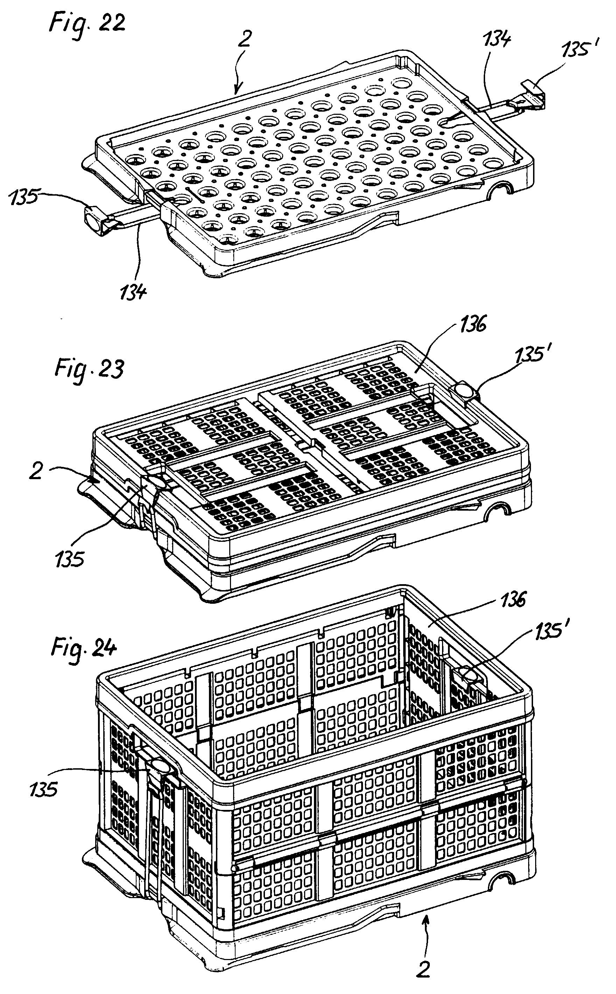

Die Fig. 21 zeigt den unteren Boden 3 in einer perspektivischen Ansicht von unten, einschließlich der daran befestigten Eckknoten 22, in denen sich jeweils die Öffnung 52 zur Aufnahme der hinteren Achsen befinden. Darüber hinaus wird aus dieser Darstellung deutlich, daß die vorderen Knotenpunkte 6 zur Aufnahme der Lenkrollen nicht massiv ausgestaltet sind, sondern eine gerippte Struktur aufweisen, wobei jeweils zentral die Bohrung 53 zur Aufnahme der Vertikalachse der Lenkrollen vorgesehen ist. Die Unterseite der Knotenpunkte 6 dient zur Lagerung auf einem später noch näher erläuterten Stützelement der Lenkrolle. Zur Versteifung der Bodenfläche 18 sind an der Unterseite kreuzweise angeordnete Rippen 54 vorgesehen. Außerdem sind an der Unterseite des Bodens 3 Aufnahmen 55 für die hinteren Rollen und Aufnahmen 55' für die Lenkrollen vorgesehen, in welchen die Rollen gehalten werden können, beispielsweise bei Verpackung des Wagens in einem Karton oder besonders platzsparendem Transport. Innerhalb der für die Rollen vorgesehenen Aufnahmen 55 und 55' weisen die Rippen 54' eine geringere Höhe auf als außerhalb dieser Aufnahmen 55, 55'.

Die oberen Böden 2 und unteren Böden 3 bestehen aus Kunststoff, haben die gleiche Grundfläche und sind derart gestaltet, daß sie auf einfache Weise sicher stapelbar sind, wobei auch die Möglichkeit zusammengeklappte Wagen zu stapeln durch die Bodenkonfiguration gegeben ist.

Die Fig. 22 zeigt einen oberen Boden 2 mit einem Spanngurt 134, der sich in Längsrichtung unterhalb des oberen Bodens 2 erstreckt und einen vorderen Haken 135 und einen hinteren Haken 135' aufweist. In Fig. 23 ist eine mittels der Haken 135, 135' auf dem Boden 2 befestigte Klappbox 136 im zusammengefalteten Zustand gezeigt, in Fig. 24 dagegen ist die Klappbox 136 aufgestellt. Der Gebrauch des Wagens macht es wünschenswert, daß die Möglichkeit besteht, die zusammengeklappte Klappbox mit dem zusammengeklappten Wagen gemeinsam zu transportieren. Außerdem erscheint eine Fixierung der aufgeklappten Box auf dem oberen Boden des aufgeklappten Wagens sinnvoll, um ein Verrutschen oder Herunterfallen zu vermeiden. Zum Fixieren der zusammengefalteten Klappbox 136 werden die Haken 135, 135' über deren oberen Rand gehängt, zum Fixieren der aufgestellten Klappbox in die Grifflöcher eingehängt. Damit die Anordnung aus Haken 135, 135' und dem Spanngurt in Form einer Rundgummikordel beim versehentlichen Loslassen des Hakens sich nicht vom Boden 2 lösen kann, ist der Spanngurt 124 an zwei Stellen in der Nahe von Hakenaufnahmen im Boden eingefaßt, vorne über eine unter dem Spanngurt verlaufende Querrippe, hinten über den bereits genannten Versteifungsbügel.

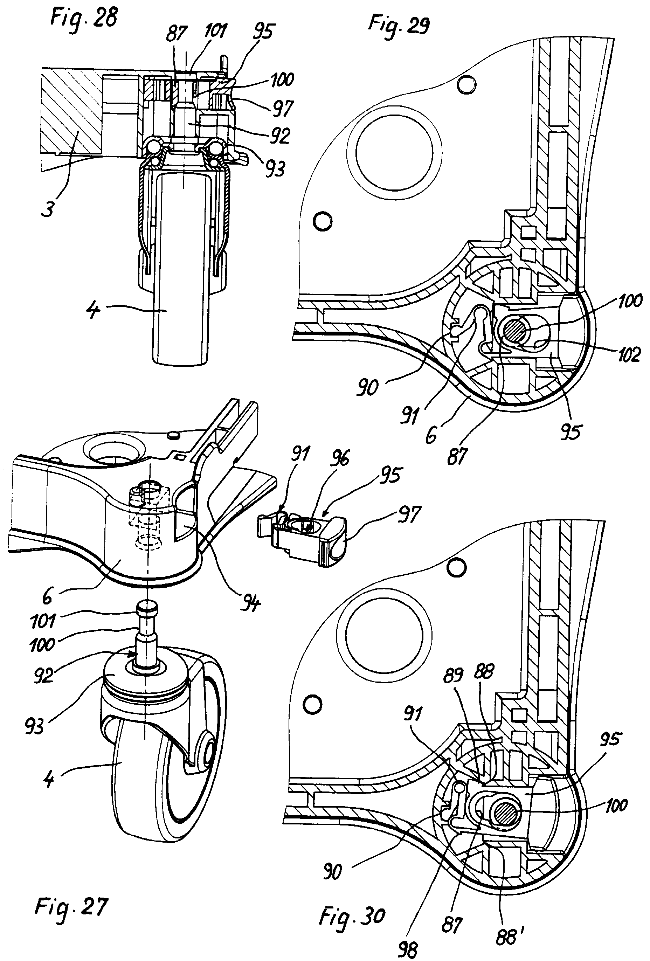

Die Fig. 25 zeigt eine Explosionsdarstellung des mittleren Abschnitts des Griffbügels 12, der aus zwei schalenförmigen Bauteilen besteht, nämlich einer Unterschale 62 und einer Oberschale 63, die zwischen sich einen Hohlraum einschließen. In der Mitte der Oberschale 63 befindet sich ein Durchbruch 64 für die Drucktaste 65, die zur Entriegelung eines nachfolgend zu Fig. 26 näher erläuterten Versteilmechanismus dient. Eine mechanische Kopplung mit diesem Mechanismus erfolgt über je einen Seilzug 66, 66', der in den hohlen Griffbügelstreben und dem Griffbügel 12 geführt ist. Die Drucktaste 65 ist an einem einarmigen Hebel 67 gelagert, der mit zwei Tastenhebeln 68, 68' in Wechselwirkung steht, an denen jeweils einer der Seilzüge 66, 66' eingehängt ist. An der Unterseite der Drucktaste 65 bzw. dem in der Drucktaste liegenden Abschnitt des Hebels 67 sind zwei kurvenförmige Führungsflächen ausgebildet, an denen die oberen als Kreisbogen geformten Enden der Tastenhebei 68, 68' entlanggleiten. Das Zusammenspiel zwischen Kurvenflächen und Kreisbögen im Zusammenhang mit dem Abstand des Seilangriffspunktes zur Schwenkachse des Tastenhebeis 68, 68' bewirkt anfänglich eine hohe Übersetzung zwischen vertikaler Bewegung der Drucktaste 65 und Zugweg der Seilzüge 66, 66'. Dies ist vorteilhaft zur Überwindung der Haftreibung des Mechanismus im Drehgelenk. Im weiteren Verlauf stellt sich etwa eine 1:1 Übersetzung und im letzten Wegabschnitt wieder eine hohe Übersetzung zum leichten Halten der Drucktaste in gedrückter Stellung ein.

Gemäß Darstellung in Fig. 26 besteht das Drehgelenk 10 im wesentlichen aus zwei Gelenkteilen 35 und 36. Das Gelenkteil 36 umfaßt zwei Außenteile 36', 36'', die mit der Hauptstrebe verbunden sind. Das Gelenkteil 35 umfaßt einen mit der Griffbügelstrebe verbundenen Innenring 35'. Diese Teile sind drehbar über einen als werkzeuglos zu montierende Schnappachse ausgebildeten Lagerzapfen 73 miteinander verbunden. In einer Führungsbahn 72 des Innenringes 35' wird ein Gelenkschieber 71 linear geführt und über eine Druckfeder 86 in seine Rastposition gedrückt. Die Außenteile 36' und 36'' weisen in spiegelbildlich gleicher Ausführung Zahnlücken 74 auf, die geometrisch mit Zähnen 75 des Gelenkschiebers 71 korrespondieren. Das Drehgelenk 10 wird zur vollständigen Abdichtung durch Abdeckungen am Innenring 35' im oberen Bereich der Führungsbahn 72 komplettiert. Die äußere Abdeckung 35'' kann ein feststehender Deckel oder ein an den Gelenkschieber gekoppelter beweglicher Deckel zur direkten Betätigung des Gelenks sein. Die innere Abdeckung des Gelenks erfolgt durch die Bügelabdeckung. Das Entriegeln kann, wie im Bild dargestellt, über eine Zugkraft am Seilzug 66, der über einen querstehenden Zylinder 66* formschlüssig mit dem Gelenkschieber 71 verbunden ist, erfolgen. Dazu dient dann der oben beschriebene Entriegelungsmechanismus.

In einer einfacheren Ausführungsvariante kann auf die zentrale Entriegelung am Griffbügel verzichtet werden, was den Einbau eines einstückigen Griffbügels aus gebogenem Profil ermöglicht. Der oben beschriebene Entriegelungsmechanismus und die Seilzüge entfallen dann. Stattdessen wird der Riegel über einen mit diesem verbundenen Deckel, der mit einer Griffmulde zum Verschieben versehen ist, direkt betätigt.

Beim Entriegeln werden die Zähne 75 außer Eingriff mit den Zahnlücken 74 der Außenteile 36', 36'' gebracht, so daß der Innenring 35' und Außenteile gegeneinander verdrehbar sind. Kommen bei der Drehbewegung die Zähne 75 des Gelenkschiebers 71 mit den Zahnlücken 74 in Überdeckung, kann der Gelenkschieber 71 einrasten. Erst nach erneutem Entriegeln kann die Drehbewegung fortgesetzt werden. Eine Ausnahme bildet die Zahnlücke 74', die aufklappseitig schräge Flanken 76 aufweist, so daß diese Rastposition beim Aufklappen überfahren wird und nur beim Zuklappen als Fangraststellung wirkt. Durch die Fangraststellung wird das Zusammenklappen des Wagens bei versehentlichem Betätigen der Entriegelungstaste bzw. das weitere Zusammenklappen durch Eigengewicht bei versehentlichem Loslassen des Griffbügels unterbunden.

Die Momentenübertragung erfolgt über die beiden Zähne 75 in ihrer Führungsbahn 72 im Innenring 35' und die entsprechenden Zahnlücken 74 in den Außenteilen 36, 36'. Die Schnappachse dient ausschließlich zur axialen Sicherung der Gelenkteile, über sie werden keine Kräfte in Drehmomentrichtung übertragen. Eine Besonderheit dieser Konstruktion ist, daß der Gelenkschieber 71 sich gleichzeitig an zwei Stellen ober- und unterhalb des Drehmittelpunktes mit den Zahnlücken 74 der Außenteile 36', 36'' verzahnt. Hierdurch verdoppelt sich die Tragfähigkeit gegenüber einer Ausführung mit nur einem Zahn, das mechanische Spiel vermindert sich und die Mittelachse bleibt bei Momentenbelastung auf das Drehgelenk annähernd frei von Querkräften. An den Zähnen 75 sind Keilflächen 75* ausgebildet, um Einrastpositionen leichter zu erreichen. Das Zusammenspiel mit Keilflächen der Außenteile 36', 36'' im eingerasteten Zustand bewirkt ein spielarmes Verrasten, so daß ein Klappern bei Lastwechsel im Betrieb vermieden wird.

Die Fig. 27 bis 30 zeigen die Art der Befestigung der Lenkrollen 4 am unteren Boden 3. Die Lenkrollen 4 besitzen einen vertikalen Lagerzapfen 92, der in die Bohrung 53 im Knotenpunkt 6 gesteckt wird. Wie aus der bereits beschriebenen Fig. 21 ersichtlich ist, ist die Unterseite des Knotenpunktes 6 so gestaltet, daß ein Stützelement 93 im unteren Bereich des Knotenpunktes 6 aufgenommen wird. Orthogonal zur Bohrung 53 verläuft ein Führungskanal 94, der die Bohrung 53 schneidet. In dem Führungskanal 94 wird ein Schieberiegel 95 längsverschieblich gelagert, der über eine angespritzte Kunststoffeder 91 abgestützt ist. Das der Außenseite des Führungskanals 94 benachbarte Ende des Schieberiegels 95 ist als Betätigungsknopf 97 ausgebildet. Am inneren Ende des Führungskanals 94 befindet sich ein Gegenlager 90 zur Abstützung der Kunststoffeder 91.

Die werksseitige Montage der Drucktaste geschieht durch bloßes seitliches Einstecken des Schieberiegels 95. Das hintere Ende der Kunststoffeder 91 wird in dem Gegenlager 90 aufgenommen. Ein Widerhaken 98 schnappt dann hinter eine Kante 88' am unteren Boden 3, so daß der Schieberiegel 95 dauerhaft gegen Verlieren gesichert ist. Wird die Lenkrolle 4 von unten in den Knotenpunkt 6 gesteckt, so wird der Schieberiegel 95 über eine Schräge 96 gegen die angespritzte Kunststoffeder 91 selbsttätig eingedrückt und schnappt schließlich mit einer Verjüngung 87 in die Ringnut 100 am Lagerzapfen 92 ein. Diese Stellung ist in Fig. 29 gezeigt.

Beim Eindrücken des Betätigungsknopfes 97 zum Demontieren der Lenkrolle 4 bewirkt das Zusammendrücken der Kunststofffeder 91 einen seitlichen Versatz, so daß sich der Schieberiegel 95 schiefstellt und sich mit einem Rasthaken 89 hinter eine Kante 88 am unteren Boden verhakt. Diese Stellung ist in Fig. 30 gezeigt.

Wird die Lenkrolle 4 anschließend nach unten herausgezogen, so läuft der obere Knopf 101 des Lagerzapfens 92 über eine nach unten angeschrägte Fläche 102 an dem Schieberiegel 95, so daß dieser aufgrund der Führung im Führungskanal 94 gezwungen ist, sich wieder gerade auszurichten. Dadurch kommt der Rasthaken wieder frei und nach vollständigem Herausziehen des Lagerzapfens wird der Schieberiegel 94 durch die Kunststoffeder 91 wieder in seine Ausgangslage gebracht, die durch den Widerhaken 98 definiert ist. Eine der Schräge 102 entgegengesetzte gleichartige Schräge bewirkt auf gleiche Weise das Entsperren des Schieberiegels beim Einführen des Lagerzapfens 92, falls der Betätigungsknopf 97 bei demontiertem Rad versehentlich gedrückt wurde. Der Vorteil dieser Konstruktion liegt in der "Speicherwirkung" des Schieberiegels, da dieser in der eingedrückten Stellung verharrt, bis die Lenkrolle 4 herausgezogen wird, es ist dabei nicht notwendig, den Schieberiegel 95 während des Herausziehens gedrückt zu halten, so daß die Betätigung mit einer Hand möglich ist.

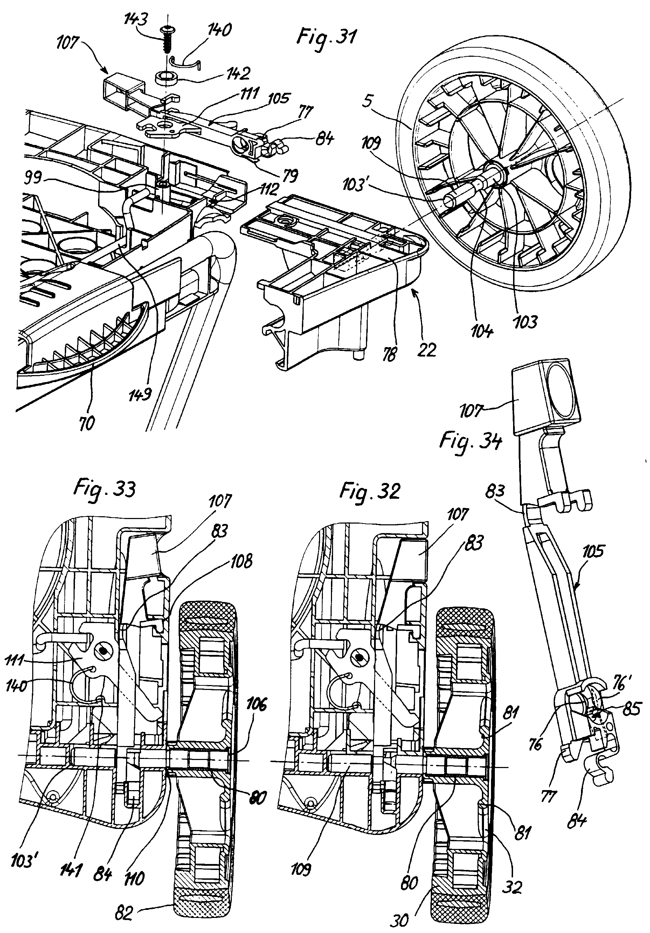

Die Fig. 31 bis 33 zeigen die Art der Befestigung der hinteren Rollen 5 an dem Eckknoten 22 des unteren Bodens 3. Um der Gesamtanordnung eine möglichst große Steifigkeit zu geben, ist in der Aussparung zwischen Boden 3 und Eckknoten 22 der aus Nebenstreben 9 und Querstrebe 31 gebildete Bügel eingesetzt. In der Bohrung 52 wird ein Lagerzapfen 103 der Rolle 5 aufgenommen. Der Lagerzapfen 103 besitzt eine Ringnut 104, deren Abstand vom vordersten Ende 103' des Lagerzapfens 103 derart bemessen ist, daß die Ringnut 104 im montierten Zustand sich in einem zwischen zwei in axialem Abstand angeordneten Bohrungsabschnitten gebildeten Bereich befindet.

Aus Fig. 31 ist ersichtlich, daß an der Hinterkante des unteren Bodens 3 eine Bremse mit einem Fußpedal 70 sowie einer Stange 149 mit gekröpften Enden und Bremsriegeln 111 vorgesehen ist. Die Feige 30 der Rolle 5 ist über eine Gleitlagerbuchse 80 drehbar im Rad gelagert, wie dies aus Fig. 32 und 33 ersichtlich ist. Die Axialsicherung im Betrieb geschieht nach außen hin über einen am Lagerzapfen 103 angestauchten flachen Kopf 106, nach innen über eine Lauffläche am Eckknoten 22.

Die Achsbohrung 52 im Eckknoten 22 ist nach außen hin gegenüber der Horizontalen um ca. 1,5° geneigt, so daß die Rolle 5 einen negativen Sturz aufweist. Durch das Zusammenspiel der Elastizitäten der Bauteile und durch Spiel in den Bohrungen 52 stellt sich auf diese Weise bei voll beladenem Wagen ein Radsturz von ungefähr Null ein. Zwei Fingerlöcher 32 mit verrundeten Hinterschneidungen 81 in den Hinterradfelgen 30 dienen zum Herausziehen der Rollen 5 aus der Gebrauchs- ebenso wie aus der Verstauposition, ohne am Reifen 82 angreifen zu müssen. Die Verriegelung des Lagerzapfens 103 im Eckknoten 22 erfolgt über ein im Eckknoten 22 geführtes Riegelteil 105, das in verriegelter Position in die Ringnut 104 am Lagerzapfen 103 eingreift (Fig. 32).

Das Riegelteil 105 ist vergrößert mit allen Einzelheiten in Fig. 34 dargestellt. Zum Entriegeln wird eine am Riegelteil 105 angeformte Drucktaste 107 gedrückt. Dies bewirkt durch eine im Riegelteil 105 integrierte Umlenkmechanik mit im Boden aufgenommener Lagerstelle 108 und elastischem Scharnier 83 eine Längsbewegung des Riegelteils 105 nach unten (in Fig. 33) gegen eine angeformte Rückstellfeder 84. Dadurch bewegt sich ein verdickter Abschnitt 85 des Riegelteils 105 aus der Ringnut 104 und gibt den Lagerzapfen 103 frei.

Analog zur Verriegelungsmechanik der Lenkrolle 4 verharrt das Riegelteil 105 bei vollständigem Hineindrücken der Drucktaste 107 in der gedrückten Position. Dies geschieht auch hier durch seitlichen Versatz des Riegelteils 105, was durch eine zusätzliche an das Riegelteil 105 angeformte seitliche Abdrückfeder 79 bewirkt wird. Dadurch greift in vollständig eingedrückter Stellung eine Rastnase 77 hinter eine entsprechende Kante 78 am Eckknoten 22. Wird die Rolle 5 mit dem Lagerzapfen 103 herausgezogen, so läuft der vordere Abschnitt 109 des Lagerzapfens 103 über eine Schräge 76 am Riegelteil 105, so daß der seitliche Versatz aufgehoben und damit die Rastnase 77 wieder freigegeben wird. Nach Herausziehen des Lagerzapfens 103 federt das Riegelteil 105 dann wieder in dieselbe Stellung zurück, die dieses im verriegelten Zustand einnimmt. Eine der Schräge 76 entgegengesetzte gleichartige Schräge 76' bewirkt auf gleiche Weise das Entsperren des Riegelteils 105 beim Einführen des Lagerzapfens 103, falls die Drucktaste 107 bei demontierter Rolle 5 versehentlich gedrückt wurde.

Zur Montage der hinteren Rolle 5 im Eckknoten und als Verliersicherung ist eine zusätzliche Axialsicherung des Lagerzapfens 103 in der Rolle 5 vorgesehen, die der Sicherung durch den Achskopf 106 gegenüberliegt. Dazu dient ein Einstich im Lagerzapfen, in den ein Ringwulst 110 am Ende der Nabe 30 eingreift. Die werksseitige Montage des Lagerzapfens 103 in der Felge 30 geschieht durch einmaliges Aufspreizen des Ringwulstes 110 über die Schräge am Ende 103' und unter Ausnutzung der Elastizität der Nabe 30. Die Montage der Rolle 5 erfolgt durch einfaches Einführen des Lagerzapfens 103 in die Bohrung 52. Das vordere Ende 103' drückt dabei das Riegelteil 105 über die Schräge 76'' gegen die Rückstellfeder 84 zur Seite. Hat der Lagerzapfen 103 seine Endstellung erreicht, so rastet das Riegelteil 105 in die Ringnut 104 ein.

Die Montage des Riegelteils 105 erfolgt gemeinsam mit der Montage des seitlich durch das Riegelteil hindurchgeführten Bremsriegels 111, indem beide von unten in den Boden 3 eingelegt werden. Das Riegelteil 105 muß dazu am elastischen Scharnier 83 aufgebogen werden und wird dann von innen mit seiner Drucktaste 107 durch eine entsprechende Aussparung im unteren Boden 3 gefädelt, wobei das Scharnier 83 zurückfedert. Gleichzeitig erfolgt der Eingriff in den bodenseitigen Teil einer Längsführung 112, während der Bremsriegel 111 mit seiner Bohrung über einen Lagerzapfen 99 am Boden 3 gesteckt wird. Anschließend wird ein Federbügel 140 zwischen Bremsriegel 111 und einer Bohrung 141 eingehängt und ein Distanzring 142 aufgeschoben. Anschließend wird der Eckknoten 22 von hinten aufgeschoben, wobei das Riegelteil 105 mit der zugehörigen Längsführung 112 im Eckknoten 22 in Eingriff kommt. Der Eckknoten 22 verrastet mit dem zuvor eingelegten Bügel aus Neben- und Querstrebe und gleichzeitig über Rasthaken mit entsprechenden Flächen am unteren Boden 3. Schließlich fixiert eine Kunststoffschraube 143, die in den Lagerzapfen 99 eingeschraubt wird, den Eckknoten 22. Der Eckknoten 22 bildet nun zusammen mit dem Boden 3 ein geschlossenes Gehäuse für die Radentriegelungs- und Bremsmechanik.

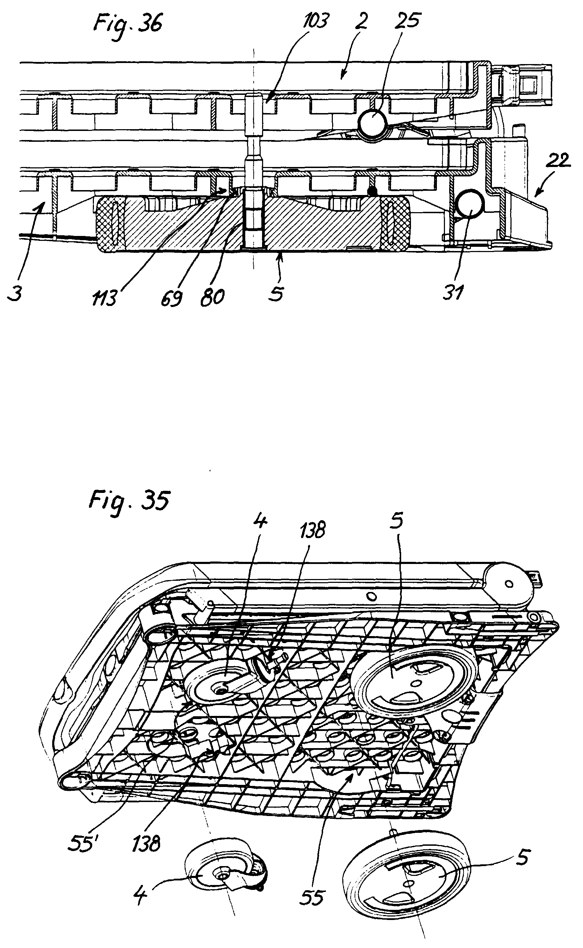

Die Fig. 35 zeigt, auf welche Weise die Rollen 4 und 5 an der Unterseite des unteren Bodens 3 verstaut werden können. Dabei ist der Wagen 1 zusammengeklappt, d.h. der obere Boden 2 und der untere Boden 3 liegen mindestens annähernd deckungsgleich unmittelbar aneinander. Es sind Aufnahmevorrichtungen 55 für die hinteren Rollen 5 vorgesehen, die zentrisch eine Buchse 113 zum Einstecken des Lagerzapfens 103 aufweisen. Der Lagerzapfen 103 hat eine axiale Länge, die größer ist als die Dicke des unteren Bodens 3. Aufgrund des Lochmusters in dem oberen Boden 2 kann sich der Lagerzapfen 103 bis in den oberen Boden 2 erstrecken. Neben den Aufnahmevorrichtungen 55 für die hinteren Rollen 5 sind zwei Aufnahmevorrichtungen 55' für die Lenkrollen 4 vorgesehen.

Die Lenkrollen 4 lassen sich über Schnappverbindungen am unteren Boden 3 lösbar fixieren. Dazu dient eine am Boden angeformte Schnappnase 138, die den Lagerzapfen 92 seitlich umgreift, und auf der gegenüberliegenden Seite ein den Reifen übergreifender Schnapphaken 55'. Eine den Reifen kreisförmig umschließende Rippe dient zusammen mit einer an der Bodenfläche eingespritzten Grafik zum Finden der richtigen Position beim Einlegen der Lenkrolle. Das Lösen der Verbindung erfolgt durch bloßes Herausziehen. Zum Verstauen der hinteren Rollen 5 werden die Lagerzapfen 103 durch Löcher am unteren Boden 3 gesteckt, die Bestandteil des am Boden ohnehin vorhandenen Lochmusters sind. Hier werden die Rollen 5 über in die Radnabe 30 integrierte lösbare Schnappverbindungen gehalten. Dies sind drei auf dem Nabenumfang verteilte beidseitig angeschrägte Rastnasen, wie dies aus Fig. 36 ersichtlich ist, denen durch einen axialen Einstich Elastizität verliehen wird. Die Rastnasen greifen in eine am unteren Ende des Lochrandes ausgebildete Ringwulst 69 ein. Auch das Lösen dieser Schnappverbindung erfolgt durch bloßes Herausziehen der Rolle 5. Die Verstaupositionen sind über einen eingespritzten Kreis als Aufnahme am Boden gekennzeichnet. Die Radachsen sind so bemessen, daß sie auch durch entsprechende Löcher im oberen Boden 2 ragen, was unproblematisch ist, da die Lochmuster der beiden Böden im zusammengeklappten Zustand deckungsgleich sind.

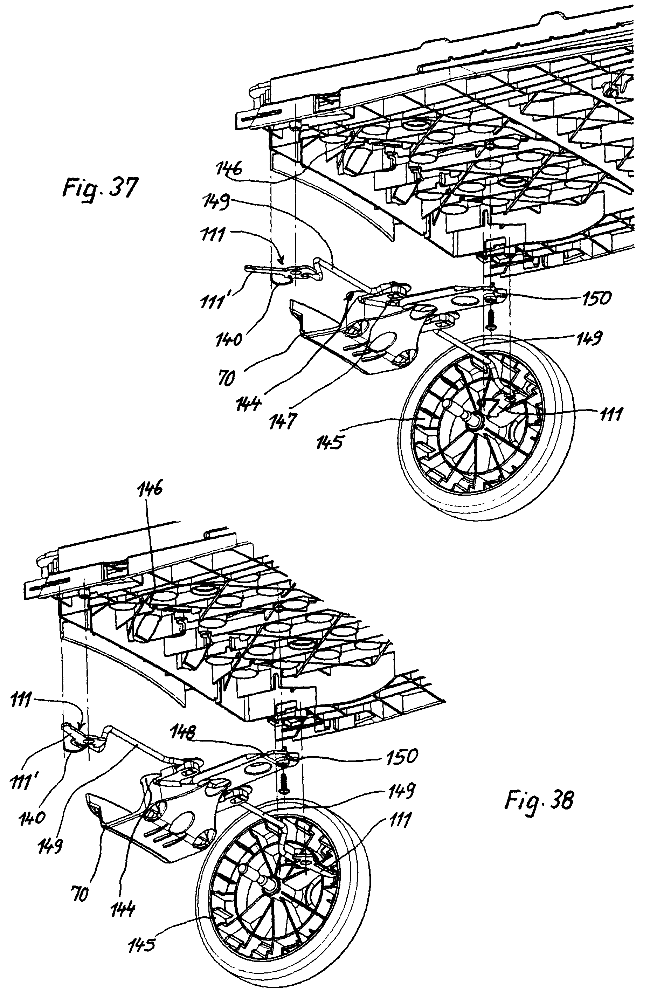

Die Fig. 37 zeigt eine Bremsanordnung für die hinteren Rollen 5 in der gelösten Stellung, wohingegen Fig. 38 die Bremsstellung darstellt. Dabei ist in der Mitte der Hinterkante des unteren Bodens 3 das Fußpedal 70 angebracht, das mit den Bremsriegeln 111 über eine Stange 149 verbunden ist. Das Fußpedal 70 ist über ein langes Ende 150 mit dem unteren Boden 3 verschraubt. Ein Filmscharnier 148 ermöglicht eine Schwenkbewegung des Pedals 70 nach unten, wenn es getreten wird. Hierdurch wird über zwei Aufhängepunkte 147 die als Bremswelle dienende Stange 149 verschwenkt, die mit zwei Kröpfungen an den Aufhängepunkten eingehängt und im Boden an mehreren Stellen, die Lageröffnungen 146 aufweisen, drehbar gelagert ist. Die Stange 149 nimmt mit ihren abgekröpften Enden den Bremsriegel 111 über eine entsprechend geformte Eingriffsstelle mit; dieser schwenkt dadurch um den Lagerzapfen 99 bis an einen Endanschlag in einem Seitenschlitz am Boden und greift mit seinem langen Ende 111' in einen Zwischenraum eines Rippenkranzes 145 mit geringer Winkelteilung an der Innenseite der Feige 30 ein. Dadurch entsteht ein Formschluß zwischen Rolle 5 und unterem Boden 3 über den Bremsriegel 111, der sich bei Drehmomentbeaufschlagung der Rolle 5 im Seitenschlitz des Bodens abstützt.

Ein als Druckfeder wirkender Federbügel 140, der in Bohrungen am unteren Boden 3 und am Bremsriegel 111 eingehängt ist, unterstützt das Ein- und Ausschwenken des Bremsriegels, indem er ihn nach dem Prinzip eines bistabilen Mechanismus in eine der beiden Endstellungen treibt. Dadurch fällt der Bremsriegel 111 auch dann, wenn er beim Betätigen der Bremse auf die Stirnfläche einer Rippe an der Feige 30 anstatt auf einen Rippenzwischenraum trifft, nachträglich in den Rippenzwischenraum ein, sobald die Rolle 5 etwas vor- oder zurückbewegt wird. Das Fußpedal 70 läßt sich aufgrund seiner Elastizität auch in diesem Falle bis zum Anschlag durchtreten.

Der Anschlag, der aus zwei Vorsprüngen 144 am Fußpedal 70 und horizontale Anschlagrippen am unteren Boden 3 gebildet wird, gibt einen spürbaren Widerstand beim Betätigen mit dem Fuß und verhindert das Überlasten des Fußpedals 70 und des Bremsmechanismus. Gelöst wird die Bremse durch Anheben des Fußpedals 70 von unten, wobei sich der Mechanismus in entgegengesetzter Richtung wie oben beschrieben bewegt und die Bremsriegel 111 dadurch wieder in den Seitenschlitz einschwenken.

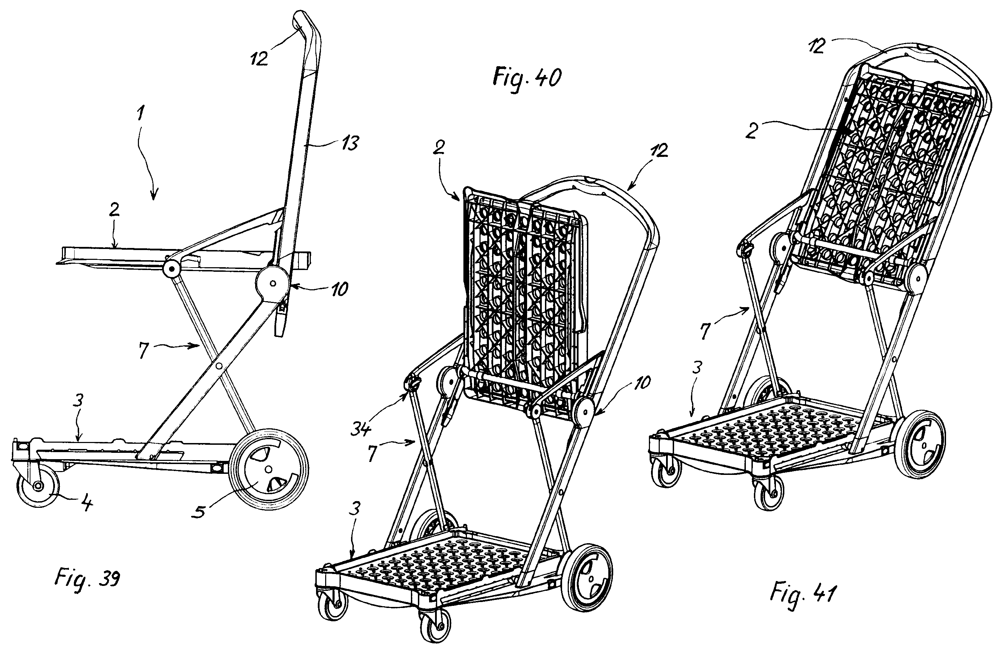

Fig. 39 zeigt eine Seitenansicht des Wagens 1 in einer weiteren Gebrauchsstellung, wobei die Griffbügelstrebe 13 eine nahezu vertikale Stellung einnimmt und somit nicht fluchtend zur Hauptstrebe 8 ist. In dieser Stellung wird die Gesamtlänge des Wagens 1 wesentlich verkürzt, so daß der Wagen 1 bei uneingeschränkter Beladungsfähigkeit einen geringeren Platzbedarf einnimmt. Dies kann insbesondere bei der Benutzung in engen Gängen oder in Aufzügen von Bedeutung sein. Damit auch der obere Boden 2 waagerecht, d.h. parallel zum unteren Boden 3 ausgerichtet ist, wird der obere Boden 2 in einem Bereich der Auflagekante 28 abgestützt, der am Beginn der Schräge des abgekröpften Endes 28' liegt.

Fig. 40 und 41 zeigen jeweils eine perspektivische Darstellung des Wagens 1 mit hochgeklapptem oberen Boden 2 in der ersten Raststellung bzw. mit vollständig hochgeklapptem oberen Boden 2 in der zweiten Raststellung. Da der obere Boden 2 drehbar auf dem Versteifungsbügel 25 gelagert ist und auf den Stützteilen 34 lediglich aufliegt, ist es ohne Schwierigkeiten möglich, den oberen Boden 2 in die in Fig. 41 gezeigte Stellung zu klappen, in welcher er zwischen den Griffbügelstreben 13 steht. Je zwei Raststellen an den Bügelabdeckungen 21 greifen beim Hochklappen des Bodens 2 in je eine am Boden angeformte Rastnase; die erste Raststelle ermöglicht, den Boden bei vollständig aufgeklapptem Wagen senkrecht zu stellen (Fig. 40), dies empfiehlt sich z.B., wenn eine Box am Boden fixiert ist, da der Wagen dann bei vollständig hochgeklapptem Boden leicht nach hinten kippen kann. Die zweite Raststellung hält den Boden 2 in vollständig hochgeklappter Position (Fig. 41), der hintere Anschlag wird dabei zur genauen Positionierung und gegen Überlastung des Rastmechanismus von zwei am Boden angeformten Laschen 130 gebildet, die am Griffbügel 12 anschlagen.

## Patentansprüche

1. Handgeführter Wagen (1), insbesondere zum Transport von Boxen und Kisten mit einem Griffbügel (12) zum Führen des auf Rollen (4, 5) abgestützten Wagens (1) und mindestens zwei im wesentlichen übereinander angeordneten Ablagen, die als ein oberer und ein unterer Boden (2, 3) ausgebildet und über gelenkig an den Böden (2, 3) gelagerte Streben (8, 9) miteinander verbunden sind und an dem auf beiden Seiten der Böden (2, 3) jeweils ein aus einer Hauptstrebe (8) und einer Nebenstrebe (9) gebildetes Scherengitter (7) mit einem drehgelenkartigen Kreuzungspunkt (11) vorgesehen ist, wobei die Nebenstrebe (9) mittels eines im wesentlichen ortsfesten Drehlagers nahe einem hinteren Rand des unteren Bodens (3) und die Hauptstrebe (8) mittels eines Dreh- und Schubgelenkes (24) an den Seiten des unteren Bodens (3) gelagert sind,
dadurch gekennzeichnet, daß der Griffbügel (12) mit seitlichen Griffbügelstreben (13) über Drehgelenke (10) an den oberen Enden der Hauptstreben (8) schwenkbar gelagert ist, so daß durch Verschwenken des Griffbügels (12) die Böden (2, 3) und Streben (8, 9) zusammenklappbar bzw. ausklappbar sind und auf jeder Seite eine gelenkig mit der Nebenstrebe (9) und der Griffbügelstrebe (13) verbundene Hilfsstrebe (14) vorgesehen ist.

2. Wagen nach Anspruch 1,
dadurch gekennzeichnet, daß den Boden (2) untergreifende Stützteile (34) nahe dem oberen Ende der Nebenstreben (13) vorgesehen sind, auf denen der obere Boden (2) abstützbar ist und am oberen Ende der Nebenstrebe (9) ein Drehgelenk (23) vorgesehen und daran die Hilfsstrebe (14) befestigt ist, wobei an dem Drehgelenk das den oberen Boden (2) untergreifende Stützteil (34) angeordnet ist und vorzugsweise der obere Boden (2) um eine entlang des rückseitigen Randes verlaufende Schwenkachse hochklappbar ist.

3. Wagen nach Anspruch 1 oder 2,
dadurch gekennzeichnet, daß die Nebenstreben (9) an ihren unteren Enden über eine Querstrebe (31) miteinander verbunden sind, die als Lagerachse der Nebenstreben (9) am unteren Boden (3) dient, wobei vorzugsweise die Nebenstreben (9) und die Querstrebe (31) einstückig ausgebildet sind und aus einem Rohr bestehen, dessen Querschnitt im Bereich der Querstrebe (31) kreisförmig und im Bereich der Nebenstreben (9) rechteckig ist

4. Wagen nach Anspruch 2 oder 3,
dadurch gekennzeichnet, daß der Boden (2) an seinen Längsseiten eine Auflagekante (28) aufweist und in den Stützteilen (34) eine Führungsnut (44) ausgebildet ist, in die die Auflagekante (28) eingreift und vorzugsweise die Auflagekante (28) einen abgekröpften Bereich (28') aufweist.

5. Wagen nach Anspruch 3,
dadurch gekennzeichnet, daß die Querstrebe (31) zwischen der Hinterkante des unteren Bodens (3) und Eckknoten (22) aufgenommen ist, wobei die Eckknoten (22) vorzugsweise seitliche Wandteile (39) aufweisen, die die unteren Bereiche der Nebenstreben (9) umgreifen.

6. Wagen nach einem der Ansprüche 1 bis 5,
dadurch gekennzeichnet, daß die Drehschubgelenke (24) jeweils einen Gleitstein (40) umfassen, der in einer seitlichen Nut (27) des unteren Bodens (3) verschieblich gelagert ist und eine Lageröffnung aufweist, in der ein Zapfen (41) am unteren Ende der Hauptstrebe (8) liegt.

7. Wagen nach einem der Ansprüche 1 bis 6,
dadurch gekennzeichnet, daß die Böden (2, 3) bezüglich ihrer Länge und Breite derart bemessen sind, daß handelsübliche Boxen rutschfest aufgenommen werden, wobei 32-Liter-Boxen innerhalb eines Randes (16, 19) auf einer Bodenfläche (15, 18) stehen und 45-Liter-Boxen auf dem Rand (16, 19) abgestützt werden.

8. Wagen nach einem der Ansprüche 1 bis 7,
dadurch gekennzeichnet, daß die Hauptstreben (8) im Bereich ihrer oberen Enden oder die Griffbügelstreben (13) nahe den Drehgelenken (10) über einen Versteifungsbügel (25) miteinander verbunden sind, wobei der Versteifungsbügel (25) die Schwenkachse für den oberen Boden (2) bildet und vorzugsweise der obere Boden (2) am rückseitigen Rand als Lager zur Aufnahme des Versteifungsbügels (25) ausgebildet ist.

9. Wagen nach Anspruch 8,
dadurch gekennzeichnet, daß im Bereich des Drehgelenks (10) am unteren Ende der Griffbügelstreben (13) eine Bügelabdeckung (21) angeordnet ist, in der das Ende des Versteifungsbügels (25) aufgenommen ist und vorzugsweise die Bügelabdeckung (21) zwei Rastnasen (122, 123) aufweist, die mit einer am oberen Boden (2) angeordneten Rastkante (129) zusammenwirken.

10. Wagen nach Anspruch 9,
dadurch gekennzeichnet, daß die Bügelabdeckung (21) an einem verlängerten Abschnitt als Stütze (29) ausgebildet ist, an dem ein schwenkbar gelagertes Aufstellteil (128) befestigt ist.

11. Wagen nach einem der Ansprüche 1 bis 10,
dadurch gekennzeichnet, daß ein Mechanismus vorgesehen ist, durch den die Streben (8, 9) in mindestens zwei Grundstellungen fixierbar sind, wobei der Mechanismus in das Drehgelenk (10) zwischen Hauptstrebe (8) und Griffbügelstrebe (13) integriert ist.

12. Wagen nach Anspruch 11,
dadurch gekennzeichnet, daß an einem der Hauptstrebe (8) zugeordneten Teil (36) des Drehgelenkes (10) radiale Ausnehmungen (74) vorgesehen sind, in die ein in dem der Griffbügelstrebe (13) zugeordneten Teil (35) des Drehgelenks (10) längsverschieblicher Gelenkschieber (71) eingreift, wobei das Drehgelenk (10) vorzugsweise in zwei Grundstellungen und mindestens einer Zwischenstellung automatisch verrastbar ist.

13. Wagen nach einem der Ansprüche 11 oder 12,
dadurch gekennzeichnet, daß der Mechanismus bzw. der Gelenkschieber (71) in Entriegelungsrichtung von einer im Griffbügel (12) gelagerten Drucktaste (65) betätigbar ist, die vorzugsweise über je einen Seilzug (66, 66') mit dem Mechanismus bzw. Gelenkschieber (71) gekoppelt ist.

14. Wagen nach Anspruch 13,
dadurch gekennzeichnet, daß an der Unterseite der Drucktaste (65) zwei kurvenförmige Führungsflächen (137, 137') vorgesehen sind, an denen je ein schwenkbar gelagerter Tastenhebel (68, 68') geführt ist, an denen die Seilzüge (66, 66') eingehängt sind.

15. Wagen nach einem der Ansprüche 1 bis 14,
dadurch gekennzeichnet, daß an mindestens einem der Böden (2, 3) ein Spanngurt (134) mit einem vorderen Haken (135) und einem hinteren Haken (135') vorgesehen ist.

16. Wagen nach einem der Ansprüche 1 bis 15,
dadurch gekennzeichnet, daß ein vier Rollen (4, 5) umfassendes Fahrwerk vorgesehen ist mit zwei vorderen Lenkrollen (4) und zwei starr gelagerten hinteren Rollen (5), wobei vertikale Lagerzapfen (92) in Knotenpunkten (6) am vorderen Rand des unteren Bodens (3) und horizontale Lagerzapfen (103) in seitliche Bohrungen (52) aufgenommen werden.

17. Wagen nach Anspruch 16,
dadurch gekennzeichnet, daß die Rollen (4, 5) mittels Schnellverschlüssen befestigbar sind, wobei die Schnellverschlüsse als Schieberiegel (95) bzw. Riegelteil (105) ausgebildet sind, die in Ringnuten (100, 104) der vertikalen Lagerzapfen (92) der Lenkrollen (4) oder Lagerzapfen (103) der starren Rollen (5) greifen.

18. Wagen nach Anspruch 17,
dadurch gekennzeichnet, daß der Schieberiegel (95) und das Riegelteil (105) in Führungen (94, 112) am unteren Boden (3) in zwei definierten Positionen einstellbar und unverlierbar gehalten sind, wobei Federmittel (91, 84) zur Rückstellung in die Verriegelungsstellung und Rastmittel (89, 77) zum temporären Halten in der Entriegelungsstellung vorgesehen sind.

19. Wagen nach einem der Ansprüche 1 bis 18,
dadurch gekennzeichnet, daß die Unterseite des unteren Bodens (3) mit Aufnahmen (55, 55') für die demontierten Rollen (4, 5) ausgebildet ist, wobei vorzugsweise zur Fixierung der Rollen (4, 5) an der Unterseite des Bodens (3) Schnappverbindungen vorgesehen sind.

20. Wagen nach einem der Ansprüche 1 bis 19,
dadurch gekennzeichnet, daß eine auf die hinteren Rollen (5) wirkende Bremsvorrichtung vorgesehen ist, die eine mit abgekröpften Enden versehene und um ihre Längsachse verschwenkbare Stange (149) umfaßt, die mit Bremsriegeln (111) zusammenwirkt, die in Zwischenräume eines Rippenkranzes (145) an der Feige (30) der hinteren Rolle (5) greifen, und zur Betätigung der Bremsvorrichtung ein Fußpedal (70) vorgesehen ist.
